# EUROPÄISCHE PATENTANMELDUNG

(11) **EP 3 725 444 A1**
(43) Veröffentlichungstag der Anmeldung: **21.10.2020**
(21) Anmeldenummer: 19170297.6
(22) Anmeldetag: 18.04.2019
(51) Int. Cl.: B23D 77/02

(54) **SCHNEIDELEMENT FÜR EIN REIBWERKZEUG SOWIE EIN REIBWERKZEUG**

(71) Anmelder: KOMET Deutschland GmbH, 74354 Besigheim (DE)
(72) Erfinder: Mayer, Manuel, 74354 Besigheim (DE)
(74) Vertreter: Ciesla, Dirk

(57) **Zusammenfassung**

Um ein Schneidelement(4a, 4b, 4c) fær ein Reibwerkzeug (1), aufweisend eine linearverlaufend ausgeformte Hauptschneidkante (410), eine linear verlaufend ausgeformte erste Nebenschneidkante (510), eine Spanleitstruktur(8a, 8b, 450, 900, 910), eine an die erste Nebenschneidkante (510) und die Hauptschneidkante (410) angrenzend ausgeformte erste Fl±che (900) der Spanleitstruktur(8a, 8b, 450, 900, 910) zu einer Kontaktierung mittels der Hauptschneidkante (410) erzeugter Sp±ne, eine linear verlaufend ausgeformte zweite Nebenschneidkante (520) und eine an die zweite Nebenschneidkante (520) angrenzend ausgeformte zweite Fl±che (8b) der Spanleitstruktur (8a, 8b, 450, 900, 910), anzugeben, welches die Nachteile des Standes der Technik æberwindet, wird vorgeschlagen, dass unter anderem ein Abstand (L950) zwischen der ersten Nebenschneidkante (510) und der zweiten Nebenschneidkante (520) kleiner als eine L±nge (L510) der ersten Nebenschneidkante (510) ist

## Beschreibung

Die vorliegende Erfindung betrifft ein Schneidelement für ein Reibwerkzeug, aufweisend eine linear verlaufend ausgeformte erste Hauptschneidkante, eine linear verlaufend ausgeformte erste Nebenschneidkante, eine Spanleitstruktur, eine an die erste Nebenschneidkante und die Hauptschneidkante angrenzend ausgeformte erste Fläche der Spanleitstruktur zu einer Kontaktierung mittels der Hauptschneidkante erzeugter Späne, eine linear verlaufend ausgeformte zweite Nebenschneidkante und eine an die zweite Nebenschneidkante angrenzend ausgeformte zweite Fläche der Spanleitstruktur.

Die vorliegende Erfindung betrifft ferner ein Reibwerkzeug, aufweisend mindestens zwei umfänglich angeordnete sowie sich in axialer Richtung erstreckende Schneidelemente.

Die vorliegende Erfindung liegt auf dem Gebiet der Feinbearbeitung von Ausnehmungen, insbesondere Bohrungen und deren Bohrungsoberflächen, vorzugsweise dergestalt, dass in einer Vorschubrichtung des Reibwerkzeugs zunächst die Feinbearbeitung mit der Hauptschneide und sodann die weitere Feinbearbeitung mit der ersten Nebenschneidkante und der zweiten Nebenschneidkante erfolgt. Letztere dienen bestimmungsgemäß typischerweise der Erhöhung einer Oberflächengüte. Mit anderen Worten ausgedrückt, die Hauptschneidkante erzeugt üblicherweise im Wesentlichen einen vorgegebenen Durchmesser, welcher auch als Fertigdurchmesser bezeichnet werden kann, wohingegen die erste und die zweite Nebenschneidkanten eine Oberflächenglättung erhöhen, insbesondere wenn eine Rundschlifffase vorgesehen ist.

Eine besonders bevorzugte Art der Feinbearbeitung ist das Reiben. Beim Reiben werden üblicherweise auf Untermaß vorgeformte Bohrungen, insbesondere Durchgangsbohrungen, aber auch Sacklochbohrungen oder dergleichen, auf eine hochpräzise radiale Abmessung, also insbesondere einen vorgegebenen Bohrungsdurchmesser, geringfügig radial aufgeweitet, um eine maßgenaue Passung eines oder mehrerer Bauteile in einer solchermaßen aufgeweiteten Bohrung zu erreichen bzw. sicherzustellen. Bohrungen sind dabei insbesondere durch Bohren, Spindeln, Aufbohren, aber auch Drehen, Fräsen oder Stechen sowie eine Kombination aus zwei oder mehr dieser Verfahren, einschließlich Bohren, erhältlich.

Ein Schneidelement der eingangs genannten Art wird vorzugsweise zum Reiben mit einem Reibwerkzeug verwendet. Dabei dient die Hauptschneidkante üblicherweise einer Materialbearbeitung in axialer Vorschubrichtung sowie in radialer Richtung bezüglich einer Bohrungshauptachse, insbesondere einer Bohrungssymmetrieachse, so dass die Bohrung durch letztere Bearbeitung aufgeweitet wird. Die erste Nebenschneidkante und die zweite Nebenschneidkante dienen der Oberflächenglättung.

Die Hauptschneidkante ist typischerweise gegenüber einer Drehachse des Schneidelements, um welche das Schneidelement für eine bestimmungsgemäße Materialbearbeitung, insbesondere eine spanende Materialbearbeitung, drehbar ist, stärker geneigt als die erste Nebenschneidkante und die zweite Nebenschneidkante. So können die Hauptschneidkante und die erste Nebenschneidkante einen Innenkantenwinkel einschließend angeordnet sein, welcher typischerweise größer oder gleich 90° und kleiner oder gleich 180° ist.

Bei der Feinbearbeitung, vorzugsweise beim Reiben, von Bohrungsoberflächen, also Oberflächen von Ausnehmungen oder dergleichen, herrschen im Vergleich mit anderen Bearbeitungsverfahren wie Fräsen, Stechen, Bohren, Drehen oder dergleichen wesentlich unterschiedliche Gegebenheiten hinsichtlich mit Vorteil einsetzbarer Schneidelemente sowie einer Spanausbildung, jedoch beeinflusst die Art sowie die Form und der Fluss der abgenommenen Späne auch beim Reiben wesentlich die erreichbare Güte von Bohrungsoberflächen und die Haltbarkeit der Schneidelemente und damit entsprechender Werkzeuge, insbesondere Reibwerkzeuge, vorzugsweise Mehrschneidreibahlen, im hohen Maße.

Daher weist ein Schneidelement der eingangs genannten Art die Spanleitstruktur auf, welche eine vorteilhafte Spanleitung, optional bereichsweise in Verbindung mit einer elastisch-plastischen Spanumformung, weg von einer zu bearbeitenden Bohrungsoberfläche oder dergleichen bereitstellend ausgeformt ist.

So kontaktieren mittels der Hauptschneidkante und der ersten Nebenschneidkante abgetragene Späne zeitlich gesehen zunächst die erste Fläche, welche typischerweise auch als Spanfläche bezeichnet werden kann, wie dies zum Beispiel bei Zerspanungswerkzeugen üblich ist. Die erste Fläche ist daher der Hauptschneidkante und der ersten Nebenschneidkante funktionell zugeordnet.

In und/oder an der ersten Fläche erfahren mittels der Hauptschneidkante, aber auch mittels der ersten Nebenschneidkante erzeugte Späne typischerweise eine erste Spanleitung, indem die Späne zum Beispiel gemäß eines vorgegebenen ersten Neigungswinkels, welcher auch als Spanwinkel bezeichnet werden kann, der ersten Fläche entlang der ersten Fläche gleiten und dabei optional je nach Ausgestaltung der ersten Fläche elastisch oder elastisch-plastisch verformt werden. Die Späne erhalten an der ersten Fläche einen ersten Bewegungsimpuls in eine erste Richtung, wobei die erste Richtung eine Funktion des ersten Neigungswinkels der ersten Fläche ist. Üblicherweise kann dabei ein Kontakt einer gattungsgemäßen Schneide an einem ersten Anschnittwinkel stattfinden.

Nach dem Kontakt mit der ersten Fläche werden die Späne typischerweise hin zu einer der ersten Fläche und der zweiten Fläche verschiedenen Spanleitfläche der Spanleitstruktur transportiert. Diese Fläche ist typischerweise gegenüber der ersten Fläche stärker geneigt, sprich steiler, so dass sie auch als eine Spanleitstufe oder Teil einer solchen bezeichnet werden kann. Die Späne erhalten an der solchermaßen bezeichneten Spanleitstufe einen zweiten Bewegungsimpuls in eine zweite Richtung, wobei die zweite Richtung eine Funktion der Neigung der Spanleistufe ist. Es wird also eine zweite Spanleitung realisiert. Die Späne sollen vor allem mithilfe der Spanleitstufe von einer Bohrungsoberfläche oder dergleichen ferngehalten werden, um auf diese Weise einen eine Oberflächengüte dieser Oberfläche verschlechternden Kontakt mit den Spänen zu vermeiden oder zumindest zu minimieren. Üblicherweise oder optional werden die Späne an der Spanleitstufe in einem im Vergleich zu der ersten Fläche größeren Maße gebrochen oder umgeformt, so dass ein funktioneller Unterschied zwischen der ersten Fläche und der Spanleitstufe gegeben ist. Es können folglich mit Vorteil für die Oberflächengüte einer Bohrungsoberfläche oder dergleichen relativ kurze Späne mittels der Spanleitstufe gebildet werden, was den Kontakt der Späne mit einer Bohrungsoberfläche zusätzlich minimiert. Üblicherweise erfahren die Späne durch die Spanleitstufe eine engere Wendelung, so dass das Spänevolumen insgesamt verringert wird.

Die zweite Fläche ist üblicherweise als Spannut oder Teil einer solchen ausgeformt und danach vor allem in axialer Richtung erstreckend ausgeformt.

Die Realisierung der Spanleitstruktur, welche üblicherweise, aber nicht nur durch Schleifen oder ein anderes Verfahren mit geometrisch unbestimmter Schneide hergestellt werden kann bzw. daraus erhältlich ist, führt unter anderem dazu, dass eine ursprünglich linear einkantige Ursprungsnebenschneidkante in zwei oder mehr jeweils linear ausgeformte Nebenschneidkanten, also insbesondere die erste Nebenschneidkante und die zweite Nebenschneidkante, strukturell unterbrochen wird, weil die Spanleitstruktur die Ursprungsnebenschneidkante unter Bildung einer typischerweise nicht linearen Übergangskante durchstößt bzw. durchstoßend ausgeformt ist, insbesondere zwischen der ersten Nebenschneidkante und der zweiten Nebenschneidkante.

So wird in der EP 2 212 049 B1 ein Schneidstück 26 eines Reib- bzw. Räumwerkzeugs 10 mit einer Hauptschneide 36 und zwei durch die Fläche 42 einer Spanleitstruktur unterbrochenen linear ausgeformten Nebenschneidkanten offenbart.

Ferner wird in der DE 410 2716 A1 eine Messerplatte 1 einer Reibahle 5 mit einer Hauptschneidkante HS und eine durch eine Fläche 25 einer Spanleitstruktur in zwei linear ausgeformte Nebenschneidkanten unterbrochene Nebenschneide NS offenbart.

Die entsprechenden Schneidelemente aus dem Stand der Technik haben jedoch insbesondere den Nachteil gemeinsam, dass bei der Materialbearbeitung einer Ausnehmung, insbesondere einer Bohrung oder dergleichen, unerwünschte Schwingungen auftreten können. Dies resultiert üblicherweise in sogenannten Rattermarken oder Schattierungen (auch Zebramuster genannt) auf einer ansonsten feinbearbeiteten, d. h. insbesondere glatten, Bohrungsoberfläche. Da die Feinbearbeitung, insbesondere das Reiben, üblicherweise der letzte Bearbeitungsschritt einer Bohrung oder dergleichen ist, verbleiben Rattermarken auf einer Bohrungsoberfläche oder dergleichen. Rattermarken wirken sich aber vor allem störend bei, insbesondere mittels Reiben, feinbearbeiteten Lageroberflächen von Gleitlagern und Wälzlagern aus, weil aufgrund der Rattermarken die Beträge der zur Charakterisierung einer Oberflächengüte üblicherweise verwendeten Parameter, zum Beispiel die gemittelte Rautiefe Rz oder der Mittenrauwert Ra, die entsprechend geforderten Beträge überschreiten, sprich, die Oberfläche ist zu rau. Außerdem führen Rattermarken zu einer Verschlechterung des optischen Erscheinungsbilds von Oberflächen. Die erwähnten Lageroberflächen werden typischerweise, aber nicht nur durch Durchgangsbohrungen gebildet.

Aufgabe der vorliegenden Erfindung ist es daher, ein Schneidelement der eingangs genannten Art sowie ein Reibwerkzeug der eingangs genannten Art bereitzustellen, mittels welcher jeweils Bohrungsoberflächen, also Oberflächen von Ausnehmungen oder dergleichen, mit einer verbesserten Oberflächengüte hergestellt werden können.

Diese Aufgabe wird durch ein Schneidelement nach Anspruch 1 gelöst. Vorteilhafte Weiterbildungen sind in den davon abhängigen Ansprüchen angegeben.

Ein Schneidelement für ein Reibwerkzeug weist eine linear verlaufend ausgeformte Hauptschneidkante, eine linear verlaufend ausgeformte erste Nebenschneidkante, eine Spanleitstruktur, eine an die erste Nebenschneidkante und die Hauptschneidkante angrenzend ausgeformte erste Fläche der Spanleitstruktur zu einer Kontaktierung mittels der Hauptschneidkante erzeugter Späne, eine linear verlaufend ausgeformte zweite Nebenschneidkante und eine an die zweite Nebenschneidkante angrenzend ausgeformte zweite Fläche der Spanleitstruktur zu einer Kontaktierung mittels der zweiten Nebenschneidkante erzeugter Späne auf, wobei mindestens eine durch zwei oder mehr Mündungskanten begrenzte erste Übergangsfläche der Spanleitstruktur in einen zwischen der ersten Nebenschneidkante und der zweiten Nebenschneidkante gebildeten Übergangsbereich in Draufsicht auf das Schneidelement schmaler werdend mündend ausgeformt und ein Abstand zwischen der ersten Nebenschneidkante und der zweiten Nebenschneidkante kleiner als eine Länge der ersten Nebenschneidkante sind. Dadurch, dass die erste Übergangsfläche derart in den Übergangsbereich, welcher insbesondere eine zwischen der ersten Nebenschneidkante und der zweiten Nebenschneidkanten gebildete nicht lineare verlaufend ausgeformte Übergangskante mit zwei Ecken, welche jeweils mit der ersten Nebenschneidkante bzw. der zweiten Nebenschneidkante verbunden sind, aufweisen kann, mündet, kann in vorteilhafterweise für eine schwingungsstabile Materialbearbeitung, also insbesondere einer Feinbearbeitung, einer Ausnehmung, insbesondere einer Bohrung, vorzugsweise einer Durchgangsbohrung, eine in Richtung der ersten Nebenschneidkante oder zweiten Nebenschneidkante bemessene Länge des Übergangsbereichs minimiert werden. Danach ist der Abstand, welcher auch ein Null einschließender Abstand, d. h. 0 µm, sein kann, zwischen der ersten Nebenschneidkante und der zweiten Nebenschneidkante kleiner als eine Länge der ersten Nebenschneidkante. Die Materialbearbeitung wird folglich in einem vorderen Bereich des Schneidelements, welcher üblicherweise als erstes in eine Ausnehmung, vorzugsweise eine Bohrung, insbesondere einer Durchgangsbohrung, eingeführt wird, an der Hauptschneidkante und der ersten Nebenschneidkante lokalisiert, wohingegen in vorteilhafterweise eine demgegenüber reduzierte Materialbearbeitung mittels des Übergangsbereichs bzw. einer dort gebildeten Übergangskante erfolgt. In gleicher Weise wird in einem hinteren Bereich des Schneidelements, welcher nach dem vorderen Bereich in die Ausnehmung eingeführt wird und wo sich demzufolge die zweite Nebeneschneidkante befindet, die Materialbearbeitung im reduzierten Maße durch den Übergangsbereich beeinflusst. Der Übergangsbereich kann derart ausgeformt sein, dass dieser in einer Seitenansicht, also in einer Richtung quer zu der ersten Nebenschneidkante oder zweiten Nebenschneidkante, auf das Schneidelement als eine nicht lineare Kante ersichtlich ist, wenn die erste Übergangsfläche durch Schleifen oder ein anderes Verfahren mit geometrisch unbestimmter Schneide hergestellt wird bzw. daraus erhältlich ist, weil die Kontur der ersten Übergangsfläche und damit die des Übergangsbereichs dadurch der Kontur eines Schleifmittelkörpers, zum Beispiel einer Schleifscheibe, korrespondierend ausgeformt ist. Der Übergangsbereich kann daher die Kontur eine Hohlkehle oder dergleichen aufweisen. Eine Reduzierung des räumlichen Ausmaßes des Übergangsbereichs maximiert daher den durch die erste Nebenschneidkante und die zweite Nebenschneidkante bereitgestellten linearen Kontaktierungsbereich mit einer Ausnehmung, insbesondere einer Bohrung, vorzugsweise einer Durchgangsbohrung, mit Vorteil für einen homogenen Verschleiß der ersten Nebenschneidkante und der zweiten Nebenschneidkante. Dadurch werden insbesondere geometrisch bedingte Verschleißmaxima minimiert, was die Standzeit des Schneidelements und damit des Reibwerkzeugs erhöht und eine schwingungsstabile Materialbearbeitung begünstigt. Danach wirkt sich die in Richtung auf den Übergangsbereich schmaler werdende Form des ersten Übergangsfläche nicht nur schwingungsreduzierend auf eine spanabhebende Materialbearbeitung mittels der ersten Nebenschneidkante und der zweiten Nebenschneidkante aus, sondern auch auf eine plastische Verformung für eine vorteilhafte Glättung einer Oberfläche einer Ausnehmung, insbesondere einer Bohrung, vorzugsweise einer Durchgangsbohrung.

Die Hauptschneidkante ist vorzugsweise mit der ersten Nebenschneidkante über eine Schneidecke, welche auch gemäß eines Kantenradius in Draufsicht auf das Schneidelement eine abgerundete Schneidecke sein kann, verbunden, wobei die Hauptschneidkante und die erste Nebenschneidkante in einem verschiedenen Anschnittwinkel zueinander angeordnet sind. Der Anschnittwinkel kann vorzugsweise 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39°, 40°, 41°, 42°, 43°, 44°, 45°, 46°, 47°, 48°, 49°, 50°, 51°, 52°, 53°, 54°, 55°, 56°, 57°, 58°, 59°, 60° 61°, 62°, 63°, 64°, 65°, 66°, 67°, 68°, 69°, 70°, 71°, 72°, 73°, 74°, 75°, 76°, 77°, 78°, 79°, 80°, 81°, 82°, 83°, 84°, 85°, 86°, 87°, 88°, 89° oder 90° betragen. Der Anschnittwinkel wird insbesondere in Draufsicht auf das Schneidelement, vorzugsweise danach in einer durch die Hauptschneidkante und die erste Nebenschneidkante aufgespannten Projektionsebene, zwischen einer linearen Extrapolation der ersten Nebenschneidkante und der Hauptschneidkante derart bemessen, dass der Anschnittwinkel außerhalb der Spanleitstruktur liegt.

Vorzugsweise sind die erste Nebenschneidkante und die zweite Nebenschneidkante parallel zueinander verlaufend ausgeformt. Dies verbessert die Feinbearbeitung noch weiter, weil solchermaßen ausgeformte Schneidkanten die Herstellung einer besonders glatten Oberfläche einer Ausnehmung, insbesondere einer Bohrung, vorzugsweise einer Durchgangsbohrung, begünstigen.

Die erste Übergangsfläche ist vorzugsweise zwischen der ersten Fläche und der zweiten Fläche angeordnet, so dass insbesondere in einer Schnittebene durch die Spanleitstruktur senkrecht zu der Hauptschneidkante eine lineare Extrapolation eines der ersten Fläche fernen Endes der Übergangsfläche eine lineare Extrapolation der zweiten Fläche in der Schnittebene kreuzt bzw. kreuzend ausgeformt ist. Besonders bevorzugt ist zwischen der ersten Übergangsfläche und der zweiten Fläche eine andere Fläche der Spanleitstruktur vorgesehen, welche größer als die erste Übergangsfläche ist und deren Begrenzungskanten einen tatsächlichen oder hypothetischen Schnittpunkt aufweisen, welcher dem Übergangsbereich benachbart ist, wobei eine der Begrenzungskanten eine der Mündungskanten ist. Noch bevorzugter ist die andere Begrenzungskante eine Kante der zweiten Fläche. Weiterhin ist es bevorzugt, wenn die andere Fläche in einer Richtung senkrecht zu der Hauptschneidkante von einer spanleitstrukturfreien Umgebung des Schneidelements aus gesehen nach der zweiten Flächen stärker ansteigt als die erste Fläche. Dadurch wird eine besondere vorteilhafte Spanleitung realisiert.

Mit in Draufsicht auf das Schneidelement schmaler werdend mündend ausgeformt ist insbesondere gemeint, dass die Mündungskanten einen tatsächlichen gemeinsamen Schnittpunkt, welcher mit dem Übergangsbereich zusammenfällt, oder einen hypothetischen gemeinsamen Schnittpunkt, welcher außerhalb des Schneidelements, also in einer spanleitstrukturfreien Umgebung des Schneidelements, liegt, aufweisen. Im ersten Fall ist der Übergangsbereich eindimensional und im zweiten Fall zweidimensional. In der Draufsicht ist insbesondere der Verlauf der Hauptschneidkante, der ersten Nebenschneidkante und der zweiten Nebenschneidkante gemeinsam ersichtlich. In der Draufsicht ist ferner insbesondere die erste Fläche, die erste Übergangsfläche und die zweite Fläche gemeinsam ersichtlich. Vorzugsweise entspricht eine Draufsicht einer orthogonalen Projektion der Spannleitstruktur in eine durch die erste Nebenschneidkante und die Hauptschneidkante aufgespannte Projektionsebene oder eine parallel dazu orientierte Projektionsebene. In diesen Projektionsebenen können auch die Schneidkanten und Schneidecken des Schneidelementes und andere strukturelle Elemente des Schneidelements mittels einer orthogonalen Projektion dargestellt werden. Die Projektionsebenen erstrecken sich im geometrischen Sinne unendlich weit, so dass die Projektionsebenen nicht an der ersten Nebenschneidkante der Hauptschneidkante bzw. deren orthogonalen Projektionen enden. Mit einer orthogonalen Projektion ist insbesondere gemeint, dass eine Projektionsrichtung parallel zu einem Normalenvektor der Projektionsebene orientiert ist.

Mit dem Abstand zwischen der ersten Nebenschneidkante und der zweiten Nebenschneidkante ist insbesondere die Länge einer linearen Extrapolation, d. h. eines Linienstücks, von der ersten Nebenschneidkante nach der zweiten Nebenschneidkante oder umgekehrt gemeint, so dass ein entsprechend extrapoliertes Linienstück die erste Nebenschneidkante mit der zweiten Nebenschneidkante oder einer orthogonalen Projektion dieser verbindet. Die Länge dieses Linienstücks ist danach der Abstand zwischen der ersten Nebenschneidkante und der zweiten Nebenschneidkante.

Als Spanleitstruktur kommen insbesondere durch Kanten zueinander, welche auch als innere Strukturkanten bezeichnet werden können, oder durch die erste Nebenschneidkante, die zweite Nebenschneidkante oder die Hauptschneidkante gegenüber einer Umgebung des Schneidelements begrenzte Flächen oder Flächenabschnitte einer Oberfläche des Schneidelements in Betracht, wobei insbesondere innere Strukturkanten von der ersten Nebenschneidkante, der zweiten Nebenschneidkante oder der Hauptschneidkante verschieden sind.

Vorzugsweise ist das Schneidelement aus einem Hartmetall, insbesondere einem gesinterten Hartmetall, hergestellt, so dass der Verschleiß noch weiter reduziert wird, insbesondere im Bereich der ersten Nebenschneidkante und der zweiten Nebenschneidkante. Mit einem Hartmetall (englisch cemented carbides) ist insbesondere ein Metallmatrix-Verbundwerkstoff gemeint, bei dem Hartstoffe, die als kleine Partikel vorliegen, durch eine Matrix aus Metall zusammengehalten werden, wobei diese Hartstoffe vor allem als Wolframkarbide vorliegen. Alternativ oder ergänzend kommen auch andere Hartstoffe in Betracht, die weniger oder kein Wolframkarbid aufweisen. Besonders bevorzugt sind Mischungen aus Cermets und Hartmetallen.

Vorzugsweise ist das Schneidelement als Schneidleiste ausgestaltet. Die Schneidleiste kann danach Teil einer monolithisch mit dieser geformten Reibahle sein. Alternativ kann es sich bei der Schneidleiste um ein mittels Löten und/oder Schrauben mit der Reibahle verbundenes Bauteil handeln.

Gemäß einer Weiterbildung des Schneidelements ist der Abstand, also der Abstand zwischen der ersten Nebenschneidkante und der zweiten Nebenschneidkante, größer oder gleich 0 µm und kleiner oder gleich 50 µm. Danach ist der Abstand vorzugsweise gleich 50 µm, 49 µm, 48 µm, 47 µm, 46 µm, 45 µm, 44 µm, 43 µm, 42 µm, 41 µm, 40 µm, 39 µm, 38 µm, 37 µm, 36 µm, 35 µm, 34 µm, 33 µm, 32 µm, 31 µm, 30 µm, 29 µm, 28 µm, 27 µm, 26 µm, 25 µm, 24 µm, 23 µm, 22 µm, 21 µm, 20 µm, 19 µm, 18 µm, 17 µm, 16 µm, 15 µm, 14 µm, 13 µm, 12 µm, 11 µm, 10 µm, 9 µm, 8 µm, 7 µm, 6 µm, 5 µm, 4 µm, 3 µm, 2 µm, 1 µm, 0,75 µm, 0,5 µm, 0,25 µm oder 0 µm, alternativ auch etwa gleich 0 µm, zum Beispiel 0,1 µm. Die Schwingungsstabilisierung des Schneidelements gegen die Bildung von Rattermarken wird mit kleiner werdendem Abstand verbessert, weil dies einer Reduzierung des Übergangsbereichs und damit einer Verkürzung einer zwischen der ersten Nebenschneidkante und der zweiten Nebenschneidkante gebildeten Übergangskante entspricht. Besonders bevorzugt wirkt sich dies auf eine den beiden Nebenschneidkanten zugeordnete Rundschlifffase aus, weil diese dadurch eine identische oder im Wesentlichen identische Breite aufweist. In gleicherweise wird dadurch, dass der Abstand im offenbarten Wertebereich liegt, der Verschleiß der ersten Nebenschneidkante und der zweiten Nebenschneidkante aneinander anglichen, was sich besonders positiv auf eine erreichbare Oberflächengüte einer Bohrung, vorzugsweise einer Durchgangsbohrung, auswirkt. Besonders bevorzugt sind daher Abstände nahe oder gleich Null.

Abstände zwischen der ersten Nebenschneidkante und der zweiten Nebenschneidkante kleiner oder gleich 50 µm sind typischerweise erst mithilfe eines Lichtmikroskops oder anderer optischer Hilfsmittel, wie zum Beispiel einem Rasterelektronenmikroskop ersichtlich, so dass eine Realisierung der Abstände von 50 µm oder weniger oder dazu führt, dass der Übergangsbereich mit dem bloßen Auge betrachtet typischerweise nicht ersichtlich ist. Die erste Nebenschneidkante und die zweite Nebenschneidkante können daher auch als makroskopisch zusammenhängende Nebenschneidkante bezeichnet werden, insbesondere als makroskopisch knickfreie Nebenschneidkante.

An dieser Stelle wird ausdrücklich festgehalten, dass eine Breite einer der ersten Nebenschneidkante und der zweiten Nebenschneidkante zugeordneten Rundschlifffase dadurch konstant gehalten werden kann, dass eine Freiflächenkante, welche eine diesen Nebenschneidkanten zugeordnete erste Freifläche gegenüber einer anderen Fläche, vorzugsweise einer zweiten Freifläche, welche in Umfangsrichtung des Schneidelements beginnend von der ersten oder der zweiten Nebenschneidkante der ersten Freifläche folgend angeordnet ist, begrenzt, einem durch die erste Nebenschneidkante, einer durch den Übergangsbereich gebildeten Übergangskante und der zweiten Nebenschneidkante gebildeten Kantenverlauf korrespondierend ausgebildet ist.

Gemäß einer Weiterbildung des Schneidelements ist mindestens eine der Mündungskanten mit einer Ecke des Übergangsbereichs verbunden sowie der zweiten Nebenschneidkante benachbart, so dass ein in Richtung quer zu der zweiten Nebenschneidkante bemessener Abstand zwischen der mit der Ecke verbundenen mindestens einen Mündungskante sowie der zweiten Nebenschneidkante eine nicht lineare Funktion einer Position entlang der zweiten Nebenschneidkante ist. Danach weist der Übergangsbereich, insbesondere wenn der Abstand größer Null, also 0 µm, ist, eine Ecke auf, welche auch als Übergangskantenecke bezeichnet werden kann, wobei die zweite Nebenschneidkante, eine der Mündungskanten, vorzugsweise eine der Mündungskanten mit dem geringsten Abstand, bemessen in eine Richtung parallel zu der ersten Nebenschneidkante oder der zweiten Nebenschneidkante, zu der zweiten Flächen, und eine zwischen der ersten Nebenschneidkante und der zweiten Nebenschneidkante gebildete Übergangskante des Übergangsbereichs mit dieser Ecke verbunden sind, so dass der Abstand quer zu der zweiten Nebenschneidkante zwischen der mit der Ecke verbundenen Mündungskante und der zweiten Nebenschneidkante eine nicht lineare Funktion einer Position entlang der zweiten Nebenschneidkante ist; das Argument der nicht linearen Funktion ist also eine insbesondere ausgehend von einem beliebigen Ursprungspunkt auf der zweiten Nebenschneidkante bemessene eindimensionale Koordinate, wonach die zweite Nebenschneidkante als Abszisse, die Richtung quer zu der zweiten Nebenschneidkante als Ordinate, welcher vorzugsweise im Bereich der Spanleitstruktur positive Ordinatenwerte zugeordnet werden können, und die Ecke als Koordinaten-Ursprungspunkt betrachtet werden können. Dadurch kann der Übergangsbereich und damit eine zwischen der ersten Nebenschneidkante und der zweiten Nebenschneidkante gebildete Übergangskante des Übergangsbereichs räumlich-körperlich besonders einfach reduziert bzw. verkürzt werden, insbesondere auf einen Abstand zwischen der ersten Nebenschneidkante und der zweiten Nebenschneidkante nahe Null, vorzugsweise gleich Null. Die Mündungskante, welche mit der Ecke des Übergangsbereich verbunden ist, erstreckt sich aufgrund der nicht linearen Funktion in eine Richtung parallel zu der ersten Nebenschneidkante oder der zweiten Nebenschneidkante sowie in eine Richtung quer zu der ersten Nebenschneidkante oder der zweiten Nebenschneidkante. Vorzugsweise kann der nicht linearen Funktion im Bereich der mit der Ecke verbundenen Mündungskante ein Wendepunkt zugeordnet werden. Vorzugsweise ist ein sich von der Ecke hin zu dem Wendepunkt erstreckender Kantenabschnitt der Mündungskante kürzer als ein sich von dem Wendepunkt hin zu einer anderen Ecke erstreckender Kantenabschnitt der Mündungskante oder umgekehrt, wobei die Längen der Kantenabschnitte anhand eines Wegintegrals ermittelbar sind. Mit diesen Maßnahmen kann eine an eine vorgegebene Spangeometrie optimale Spanleitung realisiert werden, weil die Späne eine der Realisierung des Wendepunkts entsprechende Richtungsänderung in einem Bereich der ersten Übergangsfläche hin zu einer daran angrenzenden, der ersten Fläche verschiedenen Fläche der Spanleitstruktur erfahren.

Die nicht lineare Funktion kann vorzugsweise eine polynomiale Funktion zweiten oder höheren Grades, eine kreisförmige, hyperbolische, insbesondere Hyperbel-Kosinus-, exponentielle, Wurzel-, logarithmische, Spline-, Sinus-, Kosinus- oder elliptische Funktion oder eine aus zwei oder mehreren dieser Funktionen überlagerte Funktion sein. Solchermaßen ausgewählte Funktionen, einschließlich nur eine dieser Funktionen, ergeben eine besonders vorteilhafte Reduzierung des Übergangsbereichs.

Gemäß einer Weiterbildung des Schneidelements ist eine an die erste Nebenschneidkante und die zweite Nebenschneidkante angrenzende Führungsfase zu einer Führung des Schneidelementes in und/oder an einer Ausnehmung vorgesehen. Demzufolge wird ein synergetischer Effekt realisiert, weil dadurch, dass die erste Übergangsfläche in den Übergangsbereich in Draufsicht auf das Schneidelement schmaler werdend mündend ausgeformt ist, dass der Abstand zwischen der ersten Nebenschneidkante und der zweiten Nebenschneidkante kleiner als eine Länge der ersten Nebenschneidkante ist, nicht nur die erste Nebenschneidkante und die zweite Nebenschneidkante schwingungsreduzierend stabilisiert werden, sondern auch die durch die Führungsfase bereitgestellte Führung des Schneidelements in und/oder an der Ausnehmung, insbesondere einer Bohrung, vorzugsweise einer Durchgangsbohrung, sich zusätzlich schwingungsstabilisierend auswirkt. Der durch die Form der ersten Übergangsfläche reduzierte Übergangsbereich und damit minimierte Abstand zwischen der ersten Nebenschneidkante und der zweiten Nebenschneidkante sorgt zudem dafür, dass die Führungsfase nahezu, vorzugsweise gänzlich, unterbrechungsfrei verläuft. Mit unterbrechungsfrei ist dabei insbesondere gemeint, dass die Führungsfase in einem dem Übergangsbereich benachbarten Bereich wie in einem der ersten Nebenschneidkante oder der zweiten Nebenschneidkante benachbarten Bereich ausgeformt ist. Dies kann auch als ein im Wesentlicher, vorzugsweise gänzlich, knickfreier Verlauf der Führungsfase bezeichnet werden. Das Schneidelement erfährt dadurch bereits beim Einführen in eine Ausnehmung, vorzugsweise eine Durchgangsbohrung, bevor die zweite Nebenschneidkante die Ausnehmung berührt, eine optimale Führung.

Gemäß einer Weiterbildung des Schneidelements ist die Führungsfase zumindest abschnittsweise konvex. Dadurch wird vorzugsweise eine Rundfase bereitgestellt, welche auch als Rundschlifffase bezeichnet werden kann, weil eine solche Führungsfase typischerweise durch Schleifen oder dergleichen hergestellt werden kann. Mit Vorteil ist eine entsprechende konvexe Oberfläche der Führungsfase danach konzentrisch zu einer Drehachse des Schneidelements ausgerichtet. Die Reibahle kann sich aufgrund der Rundschlifffase selbsttätig in einer Ausnehmung, insbesondere einer Bohrung, vorzugsweise einer Durchgangsbohrung, führen, wenn die Feinbearbeitung mittels der ersten Nebenschneidkante und der zweiten Nebenschneidkante durchgeführt wird. Vorzugsweise ist die Führungsfase im Bereich der ersten Nebenschneidkante und der zweiten Nebenschneidkante gänzlich konvex ausgeformt. Mit konvex ist insbesondere gemeint, dass die Führungsfase eine nach außen gekrümmte Fasenoberfläche aufweist. Danach kann eine konvexe Fasenoberfläche von einer Zylinderaußenfläche verschieden sein.

Gemäß einer Weiterbildung des Schneidelements ist eine Breite der Führungsfase konstant oder in einem an die erste Nebenschneidkante angrenzenden Bereich der Führungsfase 50 µm oder weniger kleiner als in einem an die zweite Nebenschneidkante angrenzenden Bereich der Führungsfase. Danach ist die Breite der Führungsfase zumindest nahezu konstant. Die Breite kann vorzugsweise von der ersten Nebenschneidkante bzw. der zweiten Nebenschneidkante nach einer oder mehreren Freiflächenkanten einer bzw. mehrerer der ersten Nebenschneidkante oder der zweiten Nebenschneidkante funktionell zugeordneter Freiflächen des Schneidelements bemessen werden, also als eine Länge einer die Freiflächenkante oder Freiflächenkanten und die erste Nebenschneidkante bzw. der zweite Nebenschneidkante senkrecht diese Kanten verbindende Linie. Eine konstante Breite der Führungsfase verbessert die Selbstführungseigenschaften des Schneidelements noch weiter, insbesondere wenn die Führungsfase als Rundfase bzw. Rundschlifffase ausgestaltet ist, also eine konvexe Führungsfase ist. Eine solche vorteilhafte Führung kann aber überraschenderweise auch noch mit einer im Wesentlichen konstanten Breite der Führungsfase realisiert werden, und zwar wenn die Breite in dem an die erste Nebenschneidkante angrenzenden Bereich der Führungsfase 50 µm, 49 µm, 48 µm, 47 µm, 46 µm, 45 µm, 44 µm, 43 µm, 42 µm, 41 µm, 40 µm, 39 µm, 38 µm, 37 µm, 36 µm, 35 µm, 34 µm, 33 µm, 32 µm, 31 µm, 30 µm, 29 µm, 28 µm, 27 µm, 26 µm, 25 µm, 24 µm, 23 µm, 22 µm, 21 µm, 20 µm, 19 µm, 18 µm, 17 µm, 16 µm, 15 µm, 14 µm, 13 µm, 12 µm, 11 µm, 10 µm, 9 µm, 8 µm, 7 µm, 6 µm, 5 µm, 4 µm, 3 µm, 2 µm, 1 µm, 0,75 µm, 0,5 µm oder 0,25 µm kleiner als in einem an die zweite Nebenschneidkante angrenzenden Bereich der Führungsfase ist. Dies kann auch als maximale Breitendifferenz der Führungsfase bezeichnet werden. Besonders bevorzugt ist die maximale Breitendifferenz kleiner oder gleich 20 µm, 19 µm, 18 µm, 17 µm, 16 µm, 15 µm, 14 µm, 13 µm, 12 µm, 11 µm, 10 µm, 9 µm, 8 µm, 7 µm, 6 µm, 5 µm, 4 µm, 3 µm, 2 µm, 1 µm, 0,75 µm, 0,5 µm oder 0,25 µm.

Gemäß einer Weiterbildung des Schneidelements sind die erste Nebenschneidkante und die zweite Nebenschneidkante fluchtend oder in Richtung senkrecht zu der ersten Nebenschneidkante 50 µm oder weniger zueinander parallel verlaufend versetzt angeordnet. Nach dieser Weiterbildung sind die erste Nebenschneidkante und die zweite Nebenschneidkante zumindest nahezu fluchtend. Dadurch wird der Bildung von Rattermarken oder dergleichen noch weiter vorgebeugt. Mit fluchtend ist insbesondere gemeint, dass die erste Nebenschneidkante als ein Abschnitt einer lineare Extrapolation der zweiten Nebenschneidkante betrachtet werden kann oder umgekehrt. Mit zueinander parallel verlaufend versetzt angeordnet ist insbesondere gemeint, dass eine lineare Extrapolation einer orthogonalen Projektion der ersten Nebenschneidkante als ein Abschnitt einer orthogonalen Projektion der zweiten Nebenschneidkante betrachtet werden kann oder umgekehrt. Die erste Nebenschneidkante und die zweite Nebenschneidkante sind danach senkrecht zueinander einen Versatz bildend. Der Versatz ist vorzugsweise kleiner als 50 µm, 49 µm, 48 µm, 47 µm, 46 µm, 45 µm, 44 µm, 43 µm, 42 µm, 41 µm, 40 µm, 39 µm, 38 µm, 37 µm, 36 µm, 35 µm, 34 µm, 33 µm, 32 µm, 31 µm, 30 µm, 29 µm, 28 µm, 27 µm, 26 µm, 25 µm, 24 µm, 23 µm, 22 µm, 21 µm, 20 µm, 19 µm, 18 µm, 17 µm, 16 µm, 15 µm, 14 µm, 13 µm, 12 µm, 11 µm, 10 µm, 9 µm, 8 µm, 7 µm, 6 µm, 5 µηι, 4 µm, 3 µm, 2 µm, 1 µm, 0,75 µm, 0,5 µm oder 0,25 µm. Besonders bevorzugt ist der Versatz kleiner oder gleich 20 µm, 19 µm, 18 µm, 17 µm, 16 µm, 15 µm, 14 µm, 13 µm, 12 µm, 11 µm, 10 µm, 9 µm, 8 µm, 7 µm, 6 µm, 5 µm, 4 µm, 3 µm, 2 µm, 1 µm, 0,75 µm, 0,5 µm oder 0,25 µm. Wenn die erste Nebenschneidkante und die zweite Nebenschneidkante fluchtend angeordnet sind, ist der Versatz null, d. h. 0 µm. Danach kann der Versatz auch als ein Null, also 0 µm, einschließender Versatz bezeichnet werden. Je kleiner der Versatz ist, desto positiver wirkt sich dies auf die Schwingungsstabilisierung des Schneidelements aus.

An dieser Stelle wird ausdrücklich festgehalten, dass der Versatz insbesondere durch Schleifen eines Schneidelementrohkörpers, aus welchem das Schneidelement erhältlich ist, derart herstellbar ist, dass zuerst die erste Fläche und sodann die erste Übergangsfläche zu einer Bildung eines Bereichs einer Spanleitstruktur herausgeschliffen werden, so dass die erste Übergangsfläche durch zwei oder mehr Mündungskanten begrenzt wird und in einen zwischen der ersten Nebenschneidkante und der zweiten Nebenschneidkante gebildeten Übergangsbereich in Draufsicht auf das Schneidelement schmaler werdend mündend ausgeformt wird und ein Abstand zwischen der ersten Nebenschneidkante und der zweiten Nebenschneidkante kleiner als eine Länge der ersten Nebenschneidkante wird. Vorzugsweise wird die erste Übergangsfläche mit einer von der ersten Fläche und der zweiten Fläche verschiedenen, also anderen, Fläche gemeinsam herausgeschliffen, wobei die solchermaßen als verschiedene Fläche bezeichnete Fläche größer als die erste Übergangsfläche ist und an die zweite Fläche angrenzt. Zusätzlich kann die Rundschlifffase herausgeschliffen werden, insbesondere mit einer nahezu konstanten Breite sowie optional als Führungsfase oder andersrum.

Gemäß einer Weiterbildung des Schneidelements sind eine an die zweite Fläche angrenzend ausgeformte Neigungsfläche der Spanleitstruktur und eine zwischen der Neigungsfläche und der zweiten Fläche linear verlaufend ausgeformte Übergangskante vorgesehen, so dass in einer parallel zu der Hauptschneidkante und der ersten Nebenschneidkante aufgespannten Projektionsebene eine orthogonale Projektion der Übergangskante und eine orthogonale Projektion der Hauptschneidkante in einem Kanteninnenwinkel zueinander angeordnet sind, wobei der Kanteninnenwinkel größer 20° und kleiner als 180° bemessen ist. Dadurch wird eine besonderes bevorzugte Spanleitung in und/oder an der Neigungsfläche bereitgestellt, indem an der Hauptschneidkante erzeugte Späne in eine axiale Vorschubrichtung des Schneidelements transportiert werden können, vorzugsweise wird zudem durch die Neigungsfläche eine Verformung der Späne bereitgestellt, zum Beispiel dergestalt, dass die Späne parallel zu der axialen Vorschubrichtung aufgerollt werden und auf diese Weise noch einfacher in diese Richtung transportiert werden können. Das Aufrollen der Späne führt ferner in vorteilhafterweise zu einer Verkürzung einer äußeren Abmessung der Späne. Die Neigungsfläche kann auch als Spanleitstufe oder Fläche einer solchen bezeichnet werden, wenn die Hauptschneidkante und die Übergangskante auf unterschiedlichen Höhenniveaus, bemessen in eine Richtung parallel zu einem senkrecht zu der Hauptschneidkante und der ersten Nebenschneidkante orientierten Richtungsvektor, liegen. Vorzugsweise grenzt die Neigungsfläche an die erste Übergangsfläche an, so dass eine der Mündungskanten eine gemeinsame Kante dieser Flächen ist. Vorzugsweise ist die Neigungsfläche größer als die erste Übergangsfläche. Vorzugsweise ist die Neigungsfläche in Richtung auf den Übergangsbereich schmaler werdend ausgeformt. Der Kanteninnenwinkel ist vorzugsweise gleich 25°, 30°, 35°, 40°, 45°, 50°, 55°, 60°, 65°, 70°, 75°, 80°, 85°, 90°, 95°, 100°, 105°, 110°, 115°, 120°, 125°, 130°, 135°, 140°, 145°, 150°, 155°, 160°, 165°, 170° oder 175°. Der Kanteninnenwinkel wird vorzugsweise in Draufsicht auf die erste Fläche im Uhrzeigersinn von der Projektion der Hauptschneidkante nach der Projektion der Übergangskante bemessen. Alternativ wird der Kanteninnenwinkel in Draufsicht auf die erste Fläche gegen den Uhrzeigersinn von der Projektion der Übergangskante nach der Projektion der Hauptschneidkante bemessen.

Mit der parallel zu der Hauptschneidkante und der ersten Nebenschneidkante aufgespannten Projektionsebene ist insbesondere eine Ebene gemeint, deren Normalenvektor aus einem Kreuzprodukt eines ersten Richtungsvektors und eines zweiten Richtungsvektors erhältlich ist, wobei der erste Richtungsvektor mit der Hauptschneidkante im geometrischen Sinne zusammenfällt und der zweite Richtungsvektor mit der ersten Nebenschneidkante im geometrischen Sinne zusammenfällt; die beiden Richtungsvektoren sind also komplanar. In der Projektionsebene können auch andere strukturelle Elemente des Schneidelements mittels einer orthogonalen Projektion dieser dargestellt werden. Die Projektionsebene erstreckt sich im geometrischen Sinne unendlich weit, so dass die Projektionsebene nicht an der ersten Nebenschneidkante oder der Hauptschneidkante bzw. deren orthogonalen Projektionen endet. Mit einer orthogonalen Projektion ist insbesondere gemeint, dass eine Projektionsrichtung parallel zu einem Normalenvektor der Projektionsebene orientiert ist.

Gemäß einer Weiterbildung des Schneidelements ist eine zwischen der ersten Übergangsfläche und der zweiten Fläche angeordnete dritte Fläche der Spanleitstruktur vorgesehen, wobei in einer senkrecht zu der Hauptschneidkante orientierten Schnittebene die erste Fläche und die dritte Fläche in einem größer 90° und kleiner 180° bemessenen Außenflächenwinkel zueinander angeordnet sind. Dadurch wird eine besonders sanfte Umlenkung der mittels der Hauptschneidkante und der ersten Nebenschneidkante erzeugten Späne realisiert. Insbesondere wird ein thermisch hervorgerufenes oder hervorrufbares Haften der Späne in und/oder an der dritten Fläche aufgrund des Außenflächenwinkels größer 90° und kleiner 180° vermieden oder zumindest minimiert. Die dritte Fläche kann auch als Spanleitstufe oder Fläche einer solchen bezeichnet werden. Vorzugsweise grenzt die dritte Fläche an die erste Übergangsfläche an, so dass eine der Mündungskanten eine gemeinsame Kante dieser Flächen ist. Vorzugsweise ist die dritte Fläche in Richtung auf den Übergangsbereich schmaler werdend ausgeformt. Vorzugsweise grenzt die dritte Fläche an die zweite Fläche an. Der senkrecht zu der Hauptschneidkante orientierten Schnittebene lässt sich ein zum Verlauf der Hauptschneidkante parallel orientierter Vektor als Normalenvektor zuordnen. In einer orthogonalen Projektion ist daher die Schnittebene als gerade Linie ersichtlich, welche senkrecht zu der Hauptschneidkante durch die erste Fläche, die erste Übergangsfläche und die dritte Fläche verläuft. In dieser Schnittebene sind die erste Fläche, die erste Übergangsfläche und die dritte Fläche als Linien ersichtlich. Vorzugsweise lässt sich einem durch diese Linien gebildeten Linienzug ein Minimum in Blickrichtung von der Hauptschneidkante nach der zweiten Ebene zuordnen, wonach das Minimum auch als Tiefpunkt bezeichnet werden kann. Vorzugsweise wird das Minimum durch die in der Schnittebene ersichtliche Linie der ersten Übergangsfläche gebildet. Die Hauptschneidkante ist als Durchstoßungspunkt in der Schnittebene ersichtlich. Mit dem Außenflächenwinkel ist gemeint, dass dieser Winkel nicht innerhalb des Schneidelements bemessen wird, sondern außerhalb, also etwa durch Kontaktieren eines Winkelmessmittels mit der ersten Fläche und der dritten Fläche. Der Außenflächenwinkel ist also außerhalb des Schneidelements angeordnet, wohingegen ein Innenflächenwinkel innerhalb des Schneidelements angeordnet wäre. Der Außenflächenwinkel ist vorzugsweise gleich 95°, 100°, 105°, 110°, 115°, 120°, 125°, 130°, 135°, 140°, 145°, 150°, 155°, 160°, 165°, 170° oder 175°.

Gemäß einer Weiterbildung des Schneidelements ist der Außenflächenwinkel größer oder gleich 120° und kleiner 180°. Dabei handelt es sich im einen die Spanleitung noch weiter verbessernden Bereich des Außenflächenwinkels. Der Außenflächenwinkel ist danach vorzugsweise gleich 120°, 125°, 130°, 135°, 140°, 145°, 150°, 155°, 160°, 165°, 170° oder 175°.

Gemäß einer Weiterbildung des Schneidelements ist ein Schneidkantenradius der ersten Nebenschneidkante größer oder gleich 0 µm und kleiner oder gleich 30 µm. Dadurch wird die erste Nebenschneidkante noch weiter gegen Schwingungen stabilisiert. Der Schneidkantenradius ist durch eine Schneidkantenpräparation erhältlich, zum Beispiel Sandstrahlen, Bürsten, Läppen, Schleppschleifen oder Magnetfinishing oder eine Kombination von zwei oder mehr dieser Präparationsverfahren, wonach Schneidkantenradien größer 0 µm erhältlich sind. Der Schneidkantenradius ist vorzugsweise gleich 0 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm oder 30 µm. Schneidkantenradien geringfügig kleiner als 5 µm, zum Beispiel 4 µm sowie Schneidkantenradien größer als 30 µm, zum Beispiel 35 µm, sind ebenfalls noch vorteilhaft. Wenn der Schneidkantenradius 0 µm beträgt, heißt das, dass keine Kantenpräparation vorgesehen ist. Dies ist insbesondere für einige Werkstoffe, aus denen das Schneidelement besteht, vorteilhaft.

Gemäß einer Weiterbildung des Schneidelements ist eine Nebenschneidkantenbezugslinie von einem mit der zweiten Nebenschneidkante gebildeten Schnittpunkt ausgehend nach einem davon beabstandeten Punkt der Nebenschneidkantenbezugslinie in Richtung auf das Schneidelement innerhalb eines an die zweite Fläche angrenzenden Innenbereichs des Schneidelements anordenbar, wobei die Nebenschneidkantenbezugslinie die zweite Nebenschneidkante senkrecht kreuzend sowie parallel zu einer durch die erste Nebenschneidkante und die Hauptschneidkante aufgespannten Bezugsebene orientiert ist. Dadurch kann in vorteilhafterweise für die Spanleitung eine der ersten Hauptschneidkante funktionell zugeordnete Spanleitfläche, welche an die erste Übergangskante und die zweite Flächen angrenzt und auch als Spanleitstufe oder Teil einer solchen bezeichnet werden kann, auf besonders einfache Weise vergrößert werden. Ein Transport vor allem mittels der Hauptschneidkante erzeugter Späne in eine Richtung, welche einer axialen Vorschubrichtung des Schneidelements entgegengesetzt orientiert ist, wird durch die dieser Weiterbildung entsprechende Ausgestaltung der zweiten Fläche verhindert, zumindest aber minimiert. Mit anderen Worten ausgedrückt steigt die zweite Fläche ausgehend von der zweiten Nebenschneidkante in Richtung auf das Schneidelemente an. Dies entspricht nach einer für Zerspanungswerkzeuge üblichen Definition einer Schneide, also der Geometrie der Schneidkante eines Schneidelementes, einem negativen Spanwinkel und zwar hier in radialer Richtung bezüglich einer Drehachse, um welches das Schneidelement und das Reibwerkzeug zur Feinbearbeitung einer Ausnehmung, insbesondere einer Bohrung, vorzugsweise einer Durchgangsbohrung, drehbar oder drehantreibar sind. Nach dieser Weiterbildung wird vorzugsweise die zweite Fläche derart bereitgestellt, dass mittels der zweiten Nebenschneidkante erzeugte Späne durch einen Kontakt mit der zweiten Fläche druckbeansprucht werden.

An dieser Stelle wird ausdrücklich festgehalten, dass in einer zu der zweiten Nebenschneidkante senkrecht orientierten Ebene, welche als Keilebene der zweiten Nebenschneidkante in einem vorgegebenen Punkt der zweiten Nebenschneidkante bezeichnet werden kann, die zweite Nebenschneidkante als Durchstoßungspunkt ersichtlich. Die zweite Fläche und eine der zweiten Nebenschneidkante funktionell zugeordnete Freifläche sind in der Keilebene als sich von dem Durchstoßungspunkt in verschiedene Richtungen erstreckende Linien ersichtlich. Diese Linien schließen einen Keilwinkel ein. Ferner ist in der Keilebene eine Linie, welche parallel zu einer tatsächlichen oder hypothetischen Umfangsgeschwindigkeits- oder Schnittrichtung des Schneidelements verläuft und den Durchstoßungspunkt kreuzt, ersichtlich. Diese Linie kann als Schneidebenenlinie bezeichnet werden. Schließlich ist in der Keilebene die Nebenschneidkantenbezugslinie ersichtlich, welche senkrecht zu der Schneidebenenlinie verläuft und den Durchstoßungspunkt kreuzt. Die Linie der zweiten Fläche und die Nebenschneidkantenbezugslinie sind in einem Spanwinkel, welcher auch als radialer Spanwinkel bezeichnet werden kann, zueinander angeordnet. Der Spanwinkel wird negativ bemessen, wenn die Nebenschneidkantenbezugslinie zwischen der zweiten Linie und der Linie der Freifläche verläuft. Der Spanwinkel der zweiten Fläche ist danach vorzugsweise negativ. Vorzugsweise beträgt der Spanwinkel -30°, -29°, -28°, -27°, -26°, -25°, -24°, -23°, -22°, -21°, -20°, -19°, -18°, -17, -16, -15°, -14°, -13°, -12°, -11°, -10°, -9°, -8°, -7°, -6°, -5°, -4°, -3°, -2° oder -1°. Der Spanwinkel wird hingegen positiv bemessen, wenn die Nebenschneidkantenbezugslinie nicht zwischen der Linie der zweiten Fläche und der Linie der Freifläche verläuft; die Bezugslinie verläuft dann außerhalb eines durch die Linie der zweiten Fläche und der Linie der Freifläche gebildeten Keils. Fällt die Nebenschneidkantenbezugslinie mit der Linie der zweiten Fläche zusammen, ist der Spanwinkel Null. Die Linie der Freifläche und die Schneidebenenlinie sind in einem Freiwinkel zueinander angeordnet. Der Freiwinkel ist ein innenliegender Winkel und wird positiv bemessen.

Analog zu der zweiten Nebenschneidkante können in einer senkrecht zu der ersten Nebenschneidkante orientierten Ebene (Keilebene der ersten Nebenschneidkante) ein Keilwinkel, ein Spanwinkel und ein Freiwinkel der Hauptschneidkante definiert werden.

Analog dazu können in einer senkrecht zu der Hauptschneidkante orientierten Ebene (Keilebene der Hauptschneidkante) ein Keilwinkel, ein Spanwinkel und ein Freiwinkel definiert werden.

Analog dazu ist die optionale Führungsfase des Schneidelements in den Keilebenen der ersten Nebenschneidkante und der zweiten Nebenschneidkante als gerade oder nach außen gekrümmte, also konkave, Verbindungslinie zwischen der Freiflächenlinie und dem Durchstoßungspunkt ersichtlich.

Gemäß einer Weiterbildung des Schneidelements ist eine an die zweite Fläche und die erste Übergangsfläche angrenzend ausgeformte zweite Übergangsfläche der Spanleitstruktur vorgesehen und ist eine Bezugslinie von einem mit der zweiten Nebenschneidkante gebildeten Schnittpunkt ausgehend nach einem davon beabstandeten Punkt der Bezugslinie in Richtung auf das Schneidelement außerhalb eines an die zweite Übergangsfläche angrenzenden Innenbereichs des Schneidelements anordenbar, wobei die Bezugslinie die zweite Nebenschneidkante senkrecht kreuzend sowie parallel zu einer durch die erste Nebenschneidkante und die Hauptschneidkante aufgespannten Bezugsebene orientiert ist. Dies verbessert die Spanleitung dahingehend, dass mittels der Hauptschneidkante erzeugte Späne von einer Bohrungsoberfläche wegtransportiert werden. Mit anderen Worten ausgedrückt, ist die zweite Übergangsfläche in Richtung auf das Schneidelement abfallend ausgestaltet. Wenn die Keilebene der ersten Nebenschneidkante oder der zweiten Nebenschneidkante nebst den in dieser Ebene ersichtlichen Durchstoßungspunkt der ersten bzw. zweiten Nebenschneidkante und der Linie der Freifläche, welche der ersten Nebenschneidkante oder zweiten Nebenschneidkante funktionelle zugeordnet ist, derart in Längsrichtung der ersten Nebenschneidkante oder der zweiten Nebenschneidkante verschoben wird, dass diese Ebene die zweite Übergangsfläche schneidet, ist die zweite Übergangsfläche dort als Linie ersichtlich, welche linear hin zu dem Durchstoßungspunkt extrapoliert werden kann, wonach der zweiten Übergangsfläche analog zu der ersten Fläche oder zweiten Fläche ein Spanwinkel zugeordnet werden kann. Vorzugsweise ist ein Spanwinkel der zweiten Übergangsfläche positiv, insbesondere ist der Spanwinkel danach größer oder gleich 5° und kleiner oder gleich 10°, vorzugsweise gleich 5°, 6°, 7°, 8°, 9° oder 10°. Nach dieser Weiterbildung wird vorzugsweise die zweite Übergangsfläche derart bereitgestellt, dass mittels der Hauptschneidkante erzeugte Späne durch einen Kontakt mit der zweiten Übergangsfläche druckbeansprucht werden. Vorzugsweise ist die zweite Übergangsfläche größer als die erste Übergangsfläche.

Gemäß einer Weiterbildung des Schneidelements ist die dritte Fläche die zweite Übergangsfläche und/oder die Neigungsfläche. Vorzugsweise ist die dritte Fläche die zweite Übergangsfläche oder die Neigungsfläche oder ergänzend oder alternativ dazu ist die dritte Fläche die zweite Übergangsfläche und die Neigungsfläche.

Gemäß einer Weiterbildung des Schneidelements ist erste Übergangsfläche kleiner als die dritte Fläche. Dadurch wird eine tatsächliche oder hypothetische Kontaktzeit der mittels der Hauptschneidkante erzeugten Späne mit der Spanleitstruktur einem Flächenverhältnis zwischen der dritten Fläche und der ersten Übergangsfläche entsprechend beeinflusst, dass die Kontaktzeit an der dritten Fläche größer als an der Übergangsfläche ist. Danach kann in vorteilhafter Weise eine entsprechende Spanleitung anhand einer Flächenneigung der dritten Flächen realisiert werden. Das Flächenverhältnis ist danach größer eins, wonach die erste Übergangsfläche bzw. deren Flächeninhalt kleiner als die dritte Übergangsfläche bzw. deren Flächeninhalt ist. Alternativ kann auch ein umgekehrtes Flächenverhältnis vorteilhaft sein, also ein Flächenverhältnis kleiner oder gleich eins.

Gemäß einer Weiterbildung des Schneidelements sind die erste Übergangsfläche konkav, die erste Fläche eben und die dritte Fläche eben ausgeformt. Dadurch wird in vorteilhafterweise eine bahnförmige Spanleitung bereitgestellt werden, indem zum Beispiel die erste Übergangsfläche zwischen der ersten Fläche und der dritten Fläche angeordnet ist.

Vorzugsweise ist das Schneidelement in eine die Hauptschneidkante durchstoßend orientierte Längsrichtung größer als in eine senkrecht zu der Längsachse sowie die erste Nebenschneidkante oder die zweite Nebenschneidkante durchstoßend orientierte Querrichtung ausgeformt. Durch eine solchermaßen realisierte längliche Struktur des Schneidelements können in vorteilhafterweise Durchgangsbohrungen bearbeitet werden.

Gemäß einer alternativen Betrachtungsweise kann in Richtung der Längsachse und der Querrichtung eine Projektionsebene aufgespannt werden, so dass mittels einer orthogonalen Projektion der Spanleitstruktur und der Kanten des Schneidelements in diese Projektionsebene die entsprechenden Winkel der vorliegenden Offenbarung bemessen werden können. Wenn der Anschnittwinkel tatsächlich oder hypothetisch 90° beträgt, ist die Längsachse senkrecht zu der Hauptschneidkante orientiert. Die Längsachse kann daher auch derart definiert werden, dass die Längsachse und die Hauptschneidkante gemäß eines hypothetischen Anschnittwinkels von 90° senkrecht zueinander orientiert sind,

Die eingangs genannte Aufgabe wird außerdem durch ein Reibwerkzeug nach Anspruch 17 gelöst. Vorteilhafte Weiterbildungen sind in dem davon abhängigen Anspruch angegeben.

Ein Reibwerkzeug weist mindestens zwei umfänglich angeordnete sowie sich in axialer Richtung erstreckende Schneidelemente auf, wobei mindestens eines der Schneidelemente nach einem der Ansprüche 1 bis 16 und/oder nach einer oder mehreren der hierin offenbarten Weiterbildungen dieser Schneidelemente und/oder gemäß den in den Figuren offenbarten Ausführungsformen ausgestaltet ist. Das Reibwerkzeug kann insbesondere zwei, drei, vier, fünf oder sechs oder mehr Schneidelemente aufweisen, welche vorzugsweise jeweils sämtlich nach einem der Ansprüche 1 bis 16 und/oder nach einer oder mehreren der hierin offenbarten Weiterbildungen dieser Schneidelemente und/oder gemäß den in den Figuren offenbarten Ausführungsformen ausgestaltet sind. Das Reibwerkzeug kann danach als Mehrschneidreibahle bezeichnet werden. Vorzugsweise ist die Anzahl der Schneidelemente geradzahlig oder ungeradzahlig. Die Schneidelemente sind derart axial erstreckend angeordnet, dass die jeweiligen Hauptschneidkanten der Schneidelemente eine Ausnehmung in einem betriebsgemäßen Zustand, wonach das Reibwerkzeug um eine Drehachse drehangetrieben wird, so dass eine Feinbearbeitung der Ausnehmung bereitgestellt wird, des Reibwerkzeugs zuerst berühren. Der Ort der Hauptschneidkanten kann also als eine Stirnseite des Reibwerkzeugs bezeichnet werden. Vorzugsweise weist das Reibwerkzeug an einem der Stirnseite und der Schneidelemente gegenüberliegenden Ende einen sich axial erstreckenden Montageabschnitt auf, an dem das Reibwerkzeug in und/oder an einem Werkzeughalter befestigt werden kann. Vorzugsweise sind die Schneidelemente in Umfangsrichtung des Reibwerkzeugs nicht äquidistant zueinander angeordnet. Dies erhöht die Schwingungsstabilität des Reibwerkzeugs. Vorzugsweise ist ein im Bereich der zweiten Nebenschneidkante bemessener Außendurchmesser des Reibwerkzeugs kleiner als ein im Bereich der ersten Nebenschneidkante bemessener Außendurchmesser des Reibwerkzeugs. Auf diese Weise ist das Reibwerkzeug im Bereich der Schneidelemente konisch ausgestaltet, was die Schwingungsstabilität noch weiter erhöht. Vorzugsweise erstreckt sind von dem Montageabschnitt ein Schaft des Reibwerkzeugs in Richtung der Stirnseite, wobei der Schaft eine der umfänglichen Anordnung der Schneidelemente entsprechende Anzahl konvexer Flächen aufweist, von denen mindestens eine an die zweite Fläche angrenzt, so dass ein Spanraum gebildet wird. Eine in radialer Richtung bemessene Tiefe mindestens einer der konvexen Fläche wird in Richtung von der Stirnseite nach der Schaftseite kleiner. Ein Bezugsfläche für die Messung der Tiefe ist die Oberfläche des Schafts zwischen den konvexen Flächen. Vorzugsweise ist eine der konvexen Fläche in Draufsicht auf diese in Richtung von der Stirnseite nach der Schaftseite schmaler werdend ausgeformt. Vorzugsweise ist der Außendurchmesser des Reibwerkzeugs im Bereich des Schafts kleiner als in dem Montageabschnitt und dem Bereich der Schneidelemente. Vorzugsweise nimmt der Durchmesser von einem Endabschnitt des Schafts hin zu dem Montageabschnitt kontinuierlich zu. Vorzugsweise ist mindestens eines der Schneidelemente, vorzugsweise das nach einem der Ansprüche 1 bis 16 und/oder nach einer oder mehreren der hierin offenbarten Weiterbildungen dieser Schneidelemente und/oder gemäß den in den Figuren offenbarten Ausführungsformen ausgestaltete Schneidelement, mit einem Grundkörper des Reibwerkzeugs, welcher den Schaft und den Montageabschnitt umfasst, mittels eines mechanischen Befestigungselements reversibel lösbar befestigt. Alternativ ist mindestens dieses Schneidelement stoffschlüssig mit dem Grundkörper verbunden, insbesondere mittels einer Lötverbindung.

Gemäß einer Weiterbildung ist das Reibwerkzeug monolithisch ausgeformt. Dadurch wird die Stabilität des Reibwerkzeugs noch weiter erhöht. Eines der Schneidelemente, vorzugsweise das nach einem der Ansprüche 1 bis 16 und/oder nach einer oder mehreren der hierin offenbarten Weiterbildungen dieser Schneidelemente und/oder gemäß den in den Figuren offenbarten Ausführungsformen ausgestaltete Schneidelement, ist danach mittels eines monolithischen Materialpfades mit einem Grundkörper des Reibwerkzeugs verbunden. Das Reibwerkzeug kann danach als einstückig bezeichnet werden.

Das Reibwerkzeug kann aber auch modular, nachstellbar oder gelötet ausgeformt sein.

Gemäß einer Weiterbildung des Reibwerkzeugs ist dieses durch Schleifen eines, vorzugsweise gesinterten, Reibwerkzeugrohkörpers erhältlich. Vorzugsweise ist der Reibwerkzeugrohkörper aus einem Hartmetall hergestellt.

Offenbart wird außerdem eine Verwendung des Reibwerkzeugs nach einem der Ansprüche 17 oder 18 oder nach einer oder mehreren der hierin offenbarten Weiterbildungen des Reibwerkzeugs und/oder gemäß den in den Figuren offenbarten Ausführungsformen des Reibwerkzeugs für eine Feinbearbeitung einer Sacklochbohrung oder einer Durchgangsbohrung.

Offenbart wird ferner ein Verfahren für eine Feinbearbeitung einer Durchgangsbohrung oder einer Sacklochbohrung, umfassend zumindest die Schritte: a) Bereitstellen eines Reibwerkzeugs, b) Drehantreiben des Reibwerkzeugs um eine Drehachse, c) Einführen des Reibwerkzeugs in die Ausnehmung, so dass Material in axialer und radialer Richtung von der Ausnehmung abgetragen wird, wobei das Reibwerkzeug in Schritt a) nach einem der Ansprüche 17 oder 18 oder nach einer oder mehreren der hierin offenbarten Weiterbildungen des Reibwerkzeugs und/oder gemäß den in den Figuren offenbarten Ausführungsformen des Reibwerkzeugs ausgestaltet ist. Dadurch wird ein Verfahren offenbart, welches nach Schritt c) eine besonders glatte Oberfläche der Ausnehmung bereitstellt.

Mit einer Durchgangsbohrung ist im Sinne der vorliegenden Offenbarung insbesondere eine Ausnehmung beliebigen Querschnitts, vorzugsweise eines kreisförmigen Querschnitts, oder beliebiger Querschnitte, vorzugsweise konzentrisch, kreisförmiger Querschnitte, mit mindestens zwei Öffnungen gemeint, welche miteinander kommunizierend verbunden sind.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische Darstellung einer Reibahle nach einer Ausführungsform gemäß einer Seitenansicht in Blickrichtung senkrecht auf eine Drehachse;
- Fig. 2:: eine schematische Darstellung der Reibahle nach Fig. 1 gemäß einer Stirnseitenansicht in Blickrichtung des Pfeils II aus Fig. 1;
- Fig. 3:: eine schematische Detaildarstellung der Reibahle nach Fig. 1 gemäß einer perspektivischen Ansicht von schräg oben rechts;
- Fig. 4:: eine schematische Detaildarstellung der Reibahle nach Fig. 1 gemäß einer Draufsicht auf den in Fig. 1 gekennzeichneten Bereich IV;
- Fig. 5:: eine schematische Schnittdarstellung der Reibahle nach Fig. 1 gemäß der Schnittlinie V aus Fig. 4;
- Fig. 6:: eine schematische Schnittdarstellung der Reibahle nach Fig. 1 gemäß der Schnittlinie VI aus Fig. 4;
- Fig. 7:: eine schematische Schnittdarstellung der Reibahle nach Fig. 1 gemäß der Schnittlinie VII aus Fig. 4;
- Fig. 8:: eine schematische Schnittdarstellung der Reibahle nach Fig. 1.

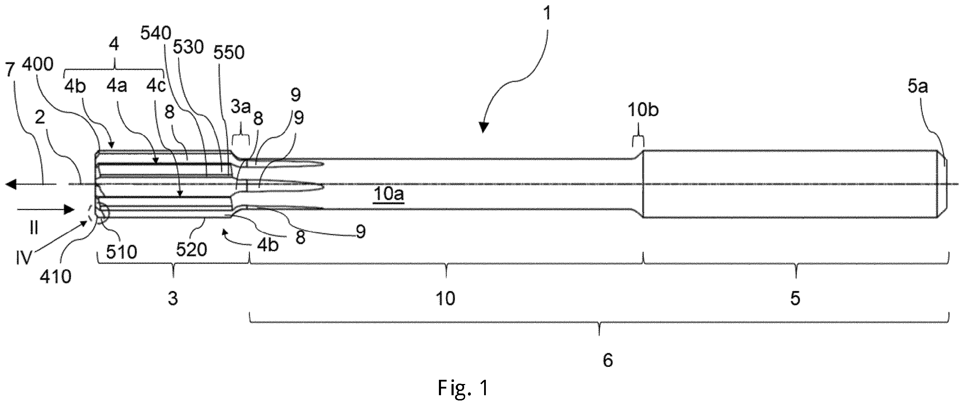

In den Figuren 1 bis 8 sind gleiche oder gleichartige Komponenten mit gleichen Bezugszeichen beziffert.

Fig. 1 zeigt eine schematische Darstellung einer Reibahle 1 nach einer ersten Ausführungsform. Die Reibahle 1 ist um eine Drehachse 2 drehbar. Die Reibahle 1 kann in einer nicht dargestellten Durchgangsbohrung derart angeordnet werden, dass eine an einem Werkzeugkopf 3 der Reibahle 1 angeordnete Schneidleistengruppe 4 der Reibahle 1 die Durchgangsbohrung bzw. deren Oberfläche kontaktiert. Wird die Reibahle 1 dabei um die Drehachse 2 drehabgetrieben, indem die Reibahle 1 an einem Verbindungabschnitt 5 eines Schafts 6 der Reibahle 1 in einem Werkzeughalter drehfest mit einer drehenden Spindel verbunden ist, wird die Durchgangsbohrung im Sinne einer Feinbearbeitung spanabhebend durch das Reibahle 1 bearbeitet. Die Reibahle 1 kann bei der Feinbearbeitung parallel zur Drehachse 2 in eine Vorschubrichtung 7 durch die Durchgangsbohrung bewegt werden.

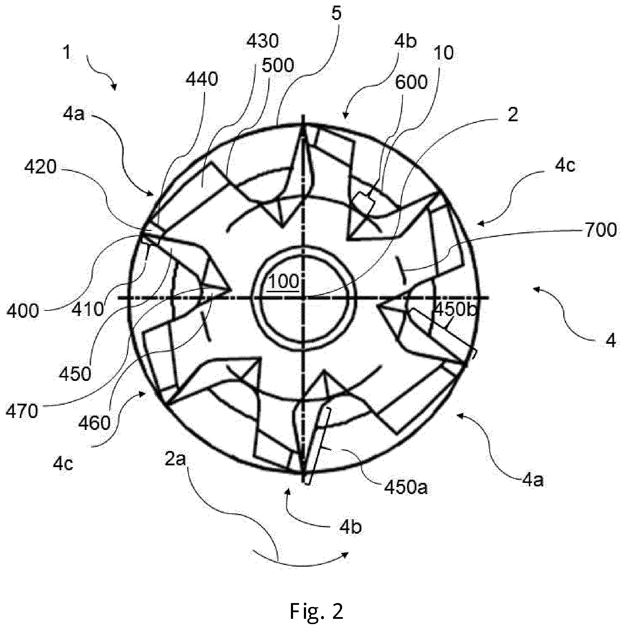

Aus einer Zusammenschau der Fig. 1 und Fig. 2, welche die Reibahle 1 in einer Stirnseitenansicht in Blickrichtung des Pfeils II aus Fig. 1 zeigt, ist ersichtlich, dass die Schneidleistengruppe 4 aus jeweils zwei Schneidleisten 4a, 4b und 4c, also insgesamt sechs Schneidleisten besteht. Die Schneidleisten 4a, 4b und 4c unterscheiden sich hinsichtlich ihrer in eine Umfangsrichtung 2a bemessenen Breite, wonach die Schneidleisten 4a breiter als die Schneidleisten 4b und die Schneidleisten 4b breiter als die Schrieidleisten 4c sind. Abgesehen davon ist der Aufbau der Schneidleisten 4a, 4b, und 4c zueinander identisch, wonach zum Beispiel die geometrischen Verhältnisse zwischen Kanten, Flächen und Punkten der Schneidleiste 4a mit denen der Schneidleiste 4a und 4b identisch sind usw.

Denkbar und auch möglich sind aber auch Schneidleisten 4a, 4b, 4c mit identischer Breiter und/oder einer von sechs abweichenden Anzahl von Schneidleisten. Die Schneidleisten 4a, 4b und 4c sind jeweils bezüglich einer Drehung von 180° um die Längsachse 2 in die Richtung 2a paarweise zueinander angeordnet, sprich eines der beiden Schneidleisten 4a kann durch diese Drehung in Deckung mit der anderen Schneidleiste 4a gebracht werden; analog gilt dies für die Schneidleisten 4b und 4c. Die Richtung 2a entspricht dem Drehsinn, in welchem die Reibahle 1 gedreht werden sollte, um eine optimale Feinbearbeitung zu erzielen. Denkbar und auch möglich ist eine Anordnung der Schneidleisten 4a, 4b, 4c oder weiterer diesen analog ausgestalteter Schneidleisten, welche nicht jeweils paarweise identisch gegenüberliegend angeordnet sind oder bei denen nur zwei identische Schneidleisten gegenüberliegend um 180° gedreht angeordnet sind. Ebenfalls kommen Reibahlen in Betracht, bei denen die Schneidleisten gelötet sind, und nicht wie gemäß Fig. 1 aus einem monolithischen Körper mit den übrigen Elementen der Reibahle 1 gebildet sind.

Jedem der Schneidleisten 4a, 4b und 4c ist eine sich axial erstreckende Spannut 8 der Reibahle 1 zugeordnet, wobei die Spannuten 8 der Bevorratung mittels der Schneidleisten 4a, 4b und 4c erzeugter Späne dienen. Drei der Spannuten 8 sind in Fig. 1 ersichtlich. Dementsprechend sind also sechs Spannuten realisiert. Denkbar und auch möglich ist aber auch eine davon abweichende Anzahl, sofern die Anzahl der Spannuten 8 der Anzahl der Schneidleisten entspricht. Die Spannuten 8 verlaufen jeweils zwischen zwei tangential benachbarten Schneidleisten 4a, 4b und 4c, wobei die Spannuten 8 jeweils in einer Auslaufzonennut 9 eines Schaftabschnitts 10 des Schafts 6 münden. Die von einer Oberfläche 10a des Schaftabschnitts 10 aus bemessene radiale Tiefe jeder der Auslaufzonennuten 9 nimmt antiparallel zur Vorschubrichtung 7 ab. Wenn die Schneidleisten 4a, 4b und 4c gelötet sind, können ebenfalls Spannuten im Sinne der Spannuten 8 vorgesehen sein, insbesondere als integraler, sprich obligatorischer, Bestandteil solcher Schneidleisten.

Aus Fig. 1 ist ferner ersichtlich, dass ein Außendurchmesser des Schaftabschnitts 10 außerhalb jeweils der Auslaufzonennuten 9 kleiner ist als ein Außendurchmesser des Verbindungsabschnitts 5 und dass der Außendurchmesser des Schaftabschnitts 10 in Richtung auf den Verbindungsabschnitt 5 kontinuierlich zunimmt, bis ein dem Außendurchmesser des Verbindungsabschnitts 5 entsprechender Außendurchmesser erreicht ist. Der Bereich des Schaftabschnitts 10, welcher diese Durchmesservariation aufweist, ist mit dem Bezugszeichen 10b gekennzeichnet. Denkbar und auch möglich sind andere Durchmesservariationen, wonach der Außendurchmesser des Schaftabschnitts 10 kleiner oder größer ist als ein Außendurchmesser des Werkzeugkopfs 3.

Der Verbindungsabschnitt 5 weist an einem Ende eine Fase 5a auf, welche das Risiko einer Verkantung des Verbindungsabschnitts 5 verringert.

Aus Fig. 1 ist ferner ersichtlich, dass jede der Schneidleisten 4a, 4b und 4c eine gerade erste Nebenschneidkante 510 und eine gerade zweite Nebenschneidkante 520 aufweist, wobei die erste Nebenschneidkante 510 bezüglich der Vorschubrichtung 7 gegenüber der zweiten Nebenschneidkante 520 weiter vorne angeordnet ist. Diese Nebenschneidkanten 510 und 520 dienen der Feinbearbeitung der Durchgangsbohrung. Ein Außendurchmesser des Werkzeugkopfs 3 wird antiparallel zur Vorschubrichtung 7 im Bereich der ersten Nebenschneidkante 510 und der zweiten Nebenschneidkante 520 kleiner, so dass der Werkzeugkopf 3 dementsprechend konisch ist. Der Außendurchmesser des Werkezugkopfs 3 ist also an einer Stirnseite, wie sie in Fig. 2 ersichtlich ist, der Reibahle 1 größer als an einer davon beabstandeten Stelle des Werkzeugkops 3. In einem Übergangsbereich 3a des Werkzeugkopfs 3 nimmt der Außendurchmesser des Werkzeugkopfs 3 in Richtung auf den Schaftabschnitt 10 kontinuierlich ab, bis der Außendurchmesser des Schaftabschnitts 10 erreicht ist.

Am Beispiel der aus der Fig. 1 ersichtlichen Schneidleiste 4a wird exemplarisch offenbart, dass der ersten Nebenschneidkante 510 und der zweiten Nebenschneidkante 520 der Schneidleisten 4a, 4b und 4c jeweils eine erste gemeinsame Freifläche 530, welche an die erste Nebenschneidkante 510 und die zweite Nebenschneidkante 530 angrenzt, und eine zweite gemeinsame Freifläche 540, welche an die Freifläche 530 angrenzt, zugeordnet sind. Zwischen der ersten Freifläche 530 und der zweiten Freifläche 540 verläuft jeweils eine gerade Freiflächenkante 550.

Am Beispiel der aus der Fig. 1 ersichtlichen beiden Schneidleisten 4a ist exemplarische offenbart, dass jede der Schneidleisten 4a, 4b, und 4c eine gerade Hauptschneidkante 410 aufweist, wobei die Hauptschneidkante 410 mit der ersten Nebenschneidkante 510 über eine Schneidecke 400 verbunden ist.

Aus Fig. 2 ist ersichtlich, dass die Reibahle 1 eine Zentrierbohrung 100 aufweist, deren Rotationssymmetrieachse die Drehachse 2 ist. Die Reibahle 1 kann über die Zentrierbohrung 100 an einem Halter gehaltert werden, so dass die Reibahle 1 durch Schleifen aus einem monolithischen zylindrischen Rohkörper ihre in den Figuren 1 bis 8 ersichtliche Kontur erhält, indem der Rohkörper gegenüber einer Schleifscheibe um die Drehachse 2 mithilfe des Halters rotiert und sodann in Kontakt mit dem Schleifmittel, welches eine translatorische oder rotatorische Relativbewegung gegenüber dem Rohkörper ausführt, gebracht wird.

Aus Fig. 2 ist ferner ersichtlich, dass sich von jeder der Schneidecken 400 die Hauptschneidkanten 410 jeweils nach innen derart erstrecken, dass jeweils eine lineare Extrapolation der Hauptschneidkante 410 nach innen die Drehachse 2 nicht schneidet. Jeder der Hauptschneidkanten 410 ist eine erste Freifläche 420, welche an die Hauptschneidkante 410 angrenzt, und eine zweite Freifläche 430, welche an die zweite Freifläche 410 angrenzt, zugeordnet. Zwischen den ersten Freiflächen 420 und den zweiten Freiflächen 430 verläuft jeweils eine gerade Freiflächenkanten 440.

Aus Fig. 2 ist ferner ersichtlich, dass den Schneidleisten 4a, 4b und 4c jeweils eine Spanleitstufe 450 zugeordnet ist, so dass mittels der Hauptschneidkanten 410 erzeugte Späne gegen jeweils an eine der entsprechenden Spanleitstufen 450 stoßen. Jede der Spanleitstufen 450 grenzt an eine Fasenfläche 460 an, welche als tangentiale Begrenzungsfläche für den Spantransport entlang jeder der Spanleitstufen 450 dient. Zwischen den Fasenflächen 460 und den Spanleitstufen 450 verläuft jeweils eine gerade Kante 470.

Am Beispiel der Spanleitstufe 450 der in Fig. 2 auf etwa 6 Uhr orientierten Schneidleiste 4b wird für die Spanleitstufen 450 der Schneidleisten 4a, 4b und 4c exemplarisch offenbart, dass jede der Spanleitstufen 450 an die in Fig. 2 nicht ersichtlichen Spannuten 8 angrenzt, indem zwischen jeder der Spanleitstufen 450 und der Spannuten 8 eine gerade Kante 450a bzw. eine gerader Kantenabschnitt 450a einer Kante 450b verläuft; die Kante 450b ist also aus verschiedenen Kanten zusammengesetzt, einschließlich der Kante 450a. Die Kanten 450a können auch als radiale Spanleitstufenkanten bezeichnet werden, weil die Kanten 450a sich in Blickrichtung parallel zur Drehachse 2 in radialer Richtung weiter erstrecken als in tangentialer Richtung, also in die Richtung 2a. Die Kanten 450a können für eine beliebige Anzahl von Schneidleiesten definiert werden.

Anhand von Fig. 2 lässt sich ferner besonders gut veranschaulichen, dass zwei der in die Richtung 2a jeweils benachbarten Kanten 450a auf jeweils einem Schenkel eines Tangentialwinkels liegen, welcher mit γ in Kombination mit einem nachfolgenden Zählindex i bezeichnet werden kann, dessen Winkelscheitel bezüglich der Reibahle 1 jeweils innen exzentrisch zur Drehachse 2 liegt. Demnach lassen sich nach Fig. 2 beginnend bei der in Fig. 2 auf etwa 12 Uhr orientierten Schneidleiste 4a sechs Winkel γ1, γ2, γ3, γ4, γ5 und γ6 zwischen den Schneidleisten 4a, 4b und 4c entlang der Richtung 2a, also entgegen dem Uhrzeigersinn, für die auf diese Weise benachbarten Kanten 450a bemessen.

Danach ist γ1 dem in Fig. 2 darstellbaren Winkel zwischen den entlang der Richtung 2a benachbarten Kanten 450a der Schneidleisten 4b (etwa 12-Uhr-Position) und 4a (etwa 10-Uhr-Position) zugeordnet. Danach ist γ2 dem in Fig. 2 darstellbaren Winkel zwischen den entlang der Richtung 2a benachbarten Kanten 450a der Schneidleisten 4a (etwa 10-Uhr-Position) und 4c (etwa 8-Uhr-Position) zugeordnet. Danach ist γ3 dem in Fig. 2 darstellbaren Winkel zwischen den entlang die Richtung 2a benachbarten Kanten 450a der Schneidleisten 4c (etwa 8-Uhr-Position) und 4b (etwa 6-Uhr-Position) zugeordnet. Danach ist γ4 dem in Fig. 2 darstellbaren Winkel zwischen den entlang die Richtung 2a benachbarten Kanten 450a der Schneidleisten 4b (etwa 6-Uhr-Position) und 4a (etwa 3-Uhr-Position) zugeordnet. Danach ist γ5 dem in Fig. 2 darstellbaren Winkel zwischen den entlang die Richtung 2a benachbarten Kanten 450a der Schneidleisten 4a (etwa 3-Uhr-Position) und 4c (etwa 2-Uhr-Position) zugeordnet. Danach ist γ6 dem in Fig. 2 darstellbaren Winkel zwischen den entlang die Richtung 2a benachbarten Kanten 450a der Schneidleisten 4c (etwa 2-Uhr-Position) und 4b (etwa 12-Uhr-Position) zugeordnet. Nach Fig. 2 ist γ1 = γ4, γ2= γ5 und γ3= γ6.

Ferner ist in Fig. 2 ersichtlich, dass jede der Fasenflächen 460 von einer mit jeweils einer der Kanten 450b verbundenen Fasenkante 600 nach der in Fig. 2 nicht ersichtlichen Spannut 8 begrenzt ist. Jeder der Fasenkanten 600 lässt sich gemäß der in Fig. 2 gewählten Ansicht mit Blickrichtung parallel zur Drehachse 2 ein konstanter Krümmungsradius zuordnen, wonach die Fasenkanten 600 konvex sind und der Krümmungsradius für alle Fasenkanten denselben Betrag aufweist. Die Fasenkanten 600 berühren einen gemeinsamen Innenkreis 700, welcher bezüglich der Drehachse 2 konzentrisch angeordnet ist. Der Innenkreis 700 kann auch als Seele bezeichnet werden.

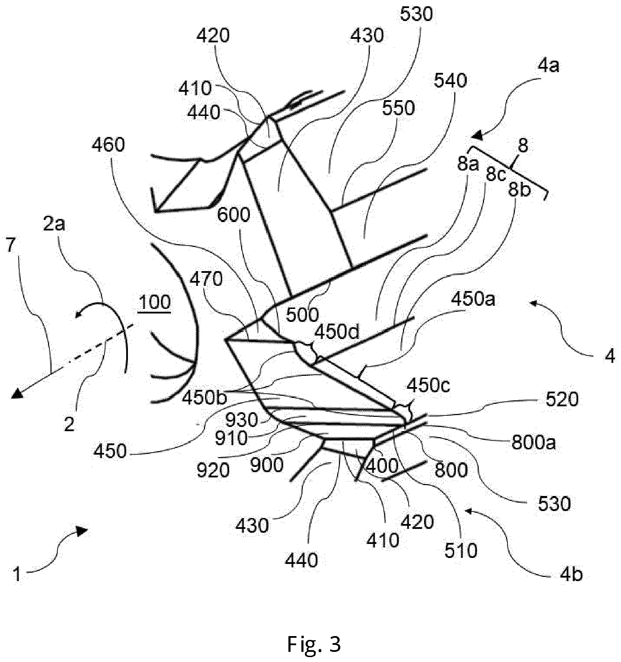

Fig. 3 zeigt eine perspektivische Detailansicht der Reibahle 1 im Bereich der zwei benachbarten Schneidleisten 4a und 4b. Anhand von Fig. 3 wird am Beispiel der Schneidleiste 4b exemplarisch für die übrigen Schneidleisten 4a, 4b und 4c offenbart, dass der Hauptschneidkante 410 eine Spanfläche 900 zugeordnet ist. Die Spanfläche 900 grenzt ebenfalls an die erste Nebenschneidkante 510 an. Zwischen der Spanfläche 900 und der Spanleitstufe 450 ist eine konvexe Übergangsfläche 910 angeordnet, welche aufgrund ihrer antiparallel zur Vorschubrichtung 7 zunehmenden Steigung funktionell der Spanleitstufe 450 mit zunehmenden Abstand von der Spanfläche 900 der Spanleitstufe 450 zugeordnet betrachtet werden kann. Zwischen der Spanfläche 900 und der Übergangsfläche 910 verläuft eine gerade Kante 920, welche in einen Übergangsbereich zwischen der ersten Nebenschneidkante 510 und der zweiten Nebenschneidkante 520 mündet, indem sie dort mit der ersten Nebenschneidkante 510 verbunden ist. Zwischen der Übergangsfläche 910 und der Spanleitstufe 450 verläuft eine gerade Kante 930, welche mit der Kante 450a verbunden ist. Von einer auf diese Weise gebildeten Ecke erstreckt sich eine nicht lineare Kante 450c, so dass die Kante 450c in den Übergangsbereich zwischen der ersten Nebenschneidkante 510 und der zweiten Nebenschneidkante 520 mündet, indem sie dort mit der zweiten Nebenschneidkante 520 verbunden ist.

Mittels der Hauptschneidkante 410 abgetragene Späne werden über die Spanfläche 900 hin zu der Spanleitstufe 450 transportiert, wenn die Reibahle 1 in die Richtung 2a um die Drehachse 2 gedreht wird, so dass die Späne an der Spanleitstufe 450 einen Bewegungsimpuls in Richtung der Vorschubrichtung 7 erhalten. Die konkave Übergangsfläche 910 stellt hierfür einen Übergang zwischen der Spanfläche 900 und der Spanleitstufe 450 im Sinne einer Kurvenbahn bereit. Die Späne werden also von einem ersten Höhenniveau an der Hauptschneidkante mittels der Spanleitstufe nach einem größeren Höhenniveau transportiert. Die Übergangsfläche 910 ist in der Praxis relativ klein gegenüber den übrigen Abmessungen der Reibahle 1, wenn diese Fläche 910 mithilfe einer Schleifscheibe herausgeschliffen wird, deren Kantenradius dementsprechend klein ist, sprich nahezu eine rechtwinklige Schleifkante aufweist.

Aus Fig. 3 ist ersichtlich, dass die Kante 450b neben der Kante 450a auch die Kante 450c umfasst. Die Kante 450b umfasst ferner auch eine nicht lineare Kante 450d, welche mit der Kante 450d und der Kante 600 verbunden ist.

Ferner ist aus Fig. 3 exemplarisch ersichtlich, dass die Spannuten 8 jeweils eine den zweiten Nebenschneidkanten 520 zugeordnete Spanfläche 8b und eine weitere Fläche 8a umfassen, welche durch eine gerade Kante 8c getrennt sind. Der Spanfläche 8b weist in radialer Richtung, also quer zur Drehachse 2 in Richtung auf die zum Beispiele zweiten Nebenschneidkante 520, einen negativen Spanwinkel auf.

Aus Fig. 3 ist ferner ersichtlich, dass der ersten Nebenschneidkante 510 und der zweiten Nebenschneidkante 520 eine Führungsfase 800 zugeordnet ist, welche demzufolge von der Spanflächen 900 durch die ersten Nebenschneidkante 510 und von der Spanfläche 8b durch die zweite Nebenschneidkante 520 begrenzt ist. Gegenüber der ersten Freifläche 530 ist die Führungsfase 800 durch die gerade Kante 800a begrenzt. Der in Richtung 2a bemessene Abstand zwischen der ersten Nebenschneidkante 510 und der Kante 800a sowie der in Richtung 2a bemessene Abstand zwischen der zweiten Nebenschneidkante 520 und der Kante 800a entspricht einer Breite der Führungsfase 800a.

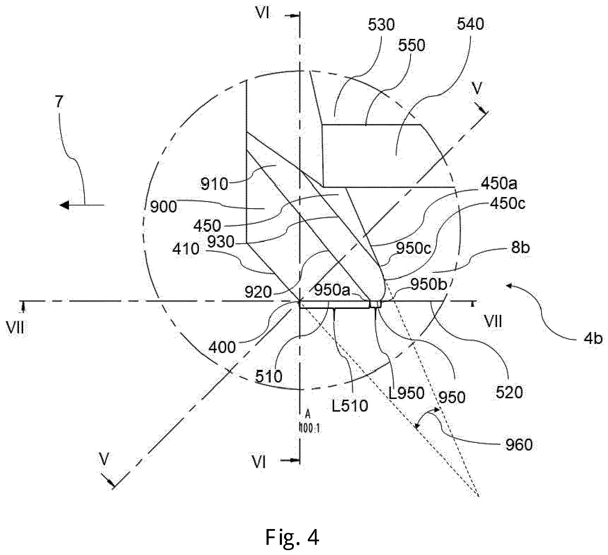

Fig. 4 zeigt eine Detaildraufsicht auf den Bereich IV der Reibahle 1 aus Fig. 1. Der Bereich IV ist um einen Faktor 100 gegenüber der Darstellung der Reibahle 1 aus Fig. 1 winkeltreu vergrößert. Daraus ist ersichtlich, dass zwischen der ersten Nebenschneidkante 510 und der zweiten Nebenschneidkante 520 ein Übergangsbereich 950 gebildet ist, indem die Übergangsfläche 910 zeitlich gesehen nach der Fläche 8b aus einem Rohkörper, aus welchem die Reibahle 1 hergestellt ist, geschliffen wurde. Die Länge des Übergangsbereichs 950 ist in eine Richtung parallel zu der ersten Nebenschneidkante 510 mit dem Bezugszeichen L950 gekennzeichnet. Die Länge der ersten Nebenschneidkante 510 ist entlang ihrer Richtung mit dem Bezugszeichen L510 gekennzeichnet.

Aus Fig. 4 ist ohne Weiteres ersichtlich, dass L950 kleiner als L510 ist, so dass der Abstand zwischen der ersten Nebenschneidkante 510 und der zweiten Nebenschneidkante 520 kleiner als L510, also der Länge der ersten Nebenschneidkante 510 ist.

Aus Fig. 4 ist ferner ersichtlich, dass der Übergangsbereich 950 als eine Kante, welche mit der zweiten Nebenschneidkante 520 und der Kante 450c unter Bildung einer Ecke 950b verbunden ist, betrachtet werden kann. Die Ecke 950b ist in Fig. 4 als Tripelpunkt ersichtlich, an welchem die Führungsfase 800, die Übergangsfläche 910 und die Spanfläche 8b zusammenstoßen. Der Übergangsbereich 950 bzw. die entsprechende Kante ist ferner mit der ersten Nebenschneidkante 510 und der Kante 920 unter Bildung einer Ecke 950a verbunden. Die Ecke 950a ist in Fig. 4 als ein Tripelpunkt ersichtlich, an welchem die Führungsfase 800, die Übergangsfläche 910 und die Spanfläche 900 zusammenstoßen.

Aus Fig. 4 ist ferner ersichtlich, dass ein in eine Richtung parallel zur Schnittlinie V, welche in Fig. 4 dargestellt ist und senkrecht zur Hauptschneidkante 410 verläuft, bemessener Abstand zwischen den Kanten 920 und 450c in eine Richtung parallel zur Kante 920 sowie in Richtung auf den Übergangsbereich 950 kleiner wird. Analog dazu wird der Abstand zwischen den Kanten 920 und 450c kleiner, wenn dieser in eine Richtung senkrecht zu der Schnittlinie VI, welche in Fig. 4 dargestellt ist und um 45° gegenüber der Hauptschneidkante 410 geneigt ist, sich dem Übergangsbereich 950 annähernd bemessen wird.

Aus Fig. 4 ist ferner ersichtlich, dass die Kante 450c sich zwischen den Ecken 950b und 950c erstreckt und dass ein senkrecht zu der ersten Nebenschneidkante 510, der zweiten Nebenschneidkante 520 oder parallel zur Schnittlinie VI bemessener Abstand zwischen der Kante 450c und der zweiten Nebenschneidkante 520 mit abnehmenden Abstand von einem beliebigen Punkt auf der zweiten Nebenschneidkante 520 nach dem Übergangsbereich 950 kleiner wird und an der Ecke 950b null ist. Der Verlauf der Kante 950b kann durch ein kubisches Polynom wiedergegeben werden. Der Wendepunkt des kubischen Polynom liegt zwischen der Ecke 950c und der Ecke 950b.

Die Ecke 950c ist in Fig. 4 als ein Tripelpunkt ersichtlich, an welchem die Spanfläche 8b, die Spanleitstufe 450 und die Übergangsfläche 910 zusammenstoßen.

An dieser Stelle wird ausdrücklich festgehalten, dass aus Fig. 4 eine für die Schneidleisten 4a, 4b und 4c exemplarische orthogonale Projektion der darin gekennzeichneten Kanten, Flächen und Ecken der Schneidleiste 4b ersichtlich ist, insbesondere also der Hauptschneidkante 410 und der Kante 450a. Die Zeichnungsebene der Fig. 4 ist parallel zu einer durch die Hauptschneidkante 410 und die erste Nebenschneidkante 510 aufgespannten Ebene, welche auch als Bezugsebene oder Projektionsebene bezeichnet werden kann, angeordnet, so dass die Zeichnungsebene und die aufgespannte Ebene denselben Normalenvektor besitzen. Die Hauptschneidkante 410 und die erste Nebenschneidkante 510 sind komplanar.

Aus der Fig. 4 ist ersichtlich, dass die Kante 450a und die Hauptschneidkante in einem Winkel 960 zueinander geordnet sind. Denkbar und auch möglich sind davon abweichende Winkel 960, sofern diese Winkel größer als 20° und kleiner als 180° sind.

Aus der Fig. 4 ist ferner ersichtlich, dass der Hauptschneidkante 410 und der links in der Fig. 4 außerhalb der Schneidleiste 4b verlaufende Abschnitt der Schnittlinie VII, also eine Linie senkrecht zu Drehachse 2, jeweils ein Winkelschenkel eines Anschnittwinkels zuordenbar sind, wobei der Winkelscheitelpunkt die Schneidecke 400 ist. Auf diese Weise wird der Anschnittwinkel definiert. Denkbar und auch möglich sind davon abweichende Anschnittwinkel.

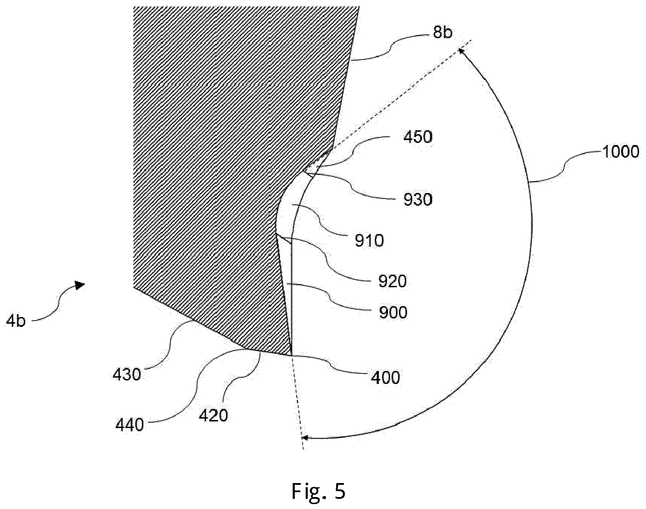

In der Schnittdarstellung nach Fig. 5, also einem Querschnitt entlang der Schnittlinie V in Blickrichtung der entsprechenden Pfeile dieser Linie gemäß Fig. 4, wird am Beispiel der Schneidleiste 4b exemplarisch für die Schneidleisten 4a, 4b und 4c offenbart, dass ein mit dem Bezugszeichen 1000 gekennzeichneter Öffnungswinkel zwischen der Spanleitstufe 450 und der Spanfläche 400 mehr als 0° beträgt. In Fig. 5 ist außerdem offenbart, dass der Übergangsfläche 910, welche konkav ist, ein konstanter Krümmungsradius zu geordnet werden kann, wonach die Übergangsfläche 910 im Querschnitt nach Fig. 5 kreisförmig ist.

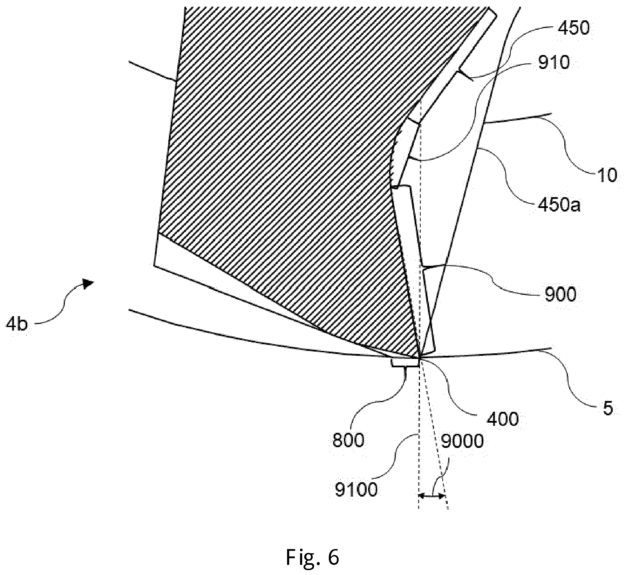

In der Schnittdarstellung nach Fig. 6, also einem Querschnitt entlang der Schnittlinie VI in Blickrichtung der entsprechenden Pfeile dieser Linie gemäß Fig. 4, wird am Beispiel der Schneidleiste 4b exemplarisch für die Schneidleisten 4a, 4b und 4c offenbart, dass ein Betrag eines radialen Spanwinkels 9000 der Spanfläche 900 mehr als 0° beträgt. Der Spanwinkel 9000 ist gemäß der in dieser Offenbarung verwendeten Konvention positiv, weil die Bezugslinie 9100, welche in der durch die Hauptschneidkante 410 und die erste Nebenschneidkante 510 aufgespannten Ebene, also der Zeichnungsebene der Fig. 4, liegt, außerhalb eines an die Spanfläche 900 angrenzenden Innenbereichs des Reibahle 1 bzw. der Schneidleiste 4b, also des von der Bezugszeichenklammer des Bezugszeichens 900 umfassten schraffierten Bereichs der Schneidleiste 4b, verläuft.

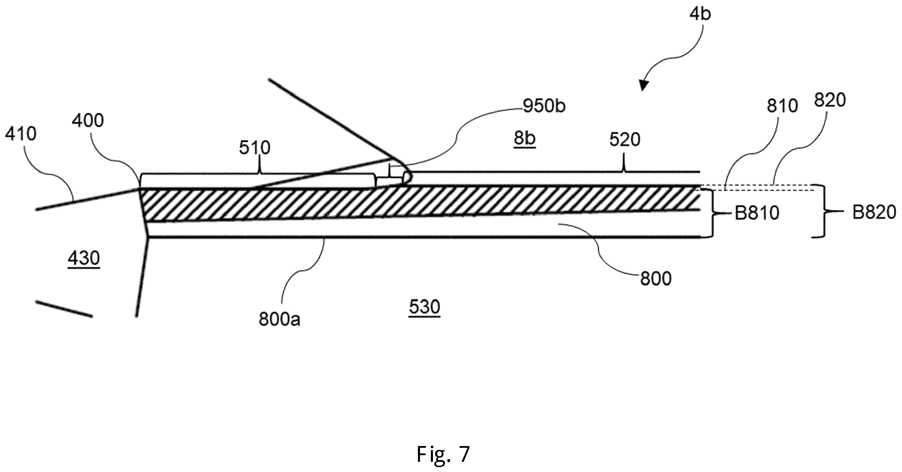

In der Schnittdarstellung nach Fig. 7, also einem Querschnitt entlang der Schnittlinie VII in Blickrichtung der entsprechenden Pfeile dieser Linie gemäß Fig. 4, ist ersichtlich, dass die erste Nebenschneidkante 510 und die zweite Nebenschneidkante 520 parallel zueinander verlaufen, wie dies anhand der gestrichelten parallelen Linien 810 und 820 ersichtlich ist. Anhand eines senkrechten Abstands der Linien 810 und 820 jeweils nach der Kante 800a ist ersichtlich, dass eine Breite B810 der Führungsfase 800 im Bereich der ersten Nebenschneidkante 510 kleiner ist als eine Breite B820 Bereich im der zweiten Nebenschneidkante 520; die entsprechende Differenz zwischen der Breite B820 und B810 beträgt beispielsweise 5 µm, was denklogisch dem Betrag eines aus Fig. 7 ersichtlichen Versatzes zwischen der ersten Nebenschneidkante 510 und der zweiten Nebenschneidkante 520 entspricht.

Die für die schematische Darstellung nach Fig. 7 gewählte Vergrößerung ist größer als die für Fig. 4 gewählte, um die relativ geringe Differenz zwischen den Breiten B810 und B820 darstellen zu können. In gleicher Weise wurde die Vergrößerung derart gewählt, um den relativ geringen Versatz zwischen der ersten Nebenschneidkante 510 und der zweiten Nebenschneidkante 520 zu verdeutlichen. Dieser Versatz ist bereits nicht mehr in der für Fig. 3 gewählten, gegenüber Fig. 7 geringeren Vergrößerung ersichtlich, obzwar die Schneidleiste 4b in beiden Figuren identisch ist.

An dieser Stelle wird ausdrücklich festgehalten, dass die Führungsfase 800 als Rundschlifffase realisiert ist, die gegenüber der Drehachse 2 konzentrisch ausgerichtet ist. Denkbar und auch möglich ist aber auch eine davon verschiedene Ausrichtung.

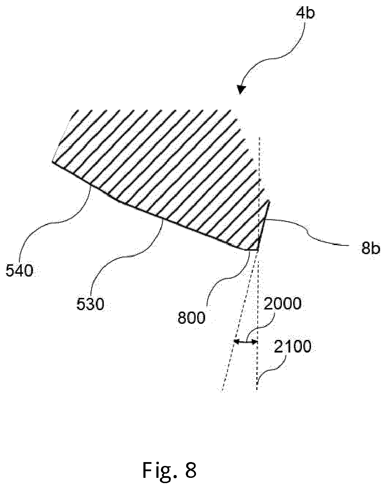

Fig. 8 zeigt eine Schnittdarstellung gemäß eines beliebigen Querschnitts senkrecht zur zweiten Nebenschneidkante 520, sprich ein Normalenvektor der Schnittebene nach Fig. 8 ist parallel zu der zweiten Nebenschneidkante 520 orientiert. Aus Fig. 8 ist exemplarisch für die Schneidleisten 4a, 4b und 4c ersichtlich, dass ein radialer Spanwinkel 2000 der Spanfläche 8b realisiert ist.

Der Spanwinkel 2000 ist gemäß der in dieser Offenbarung verwendeten Konvention negativ, weil die Bezugslinie 2100, welche parallel zu der die Hauptschneidkante 410 und die erste Nebenschneidkante 510 aufgespannten Ebene verläuft und dabei die zweite Nebenschneidkanten 520 senkrecht kreuzt, innerhalb eines an die Spanfläche 8b angrenzenden Innenbereichs des Reibwerkzeugs 1 bzw. der Schneidleiste 4b verläuft, wie dies aus Fig. 8 ersichtlich ist. Denkbar und auch möglich sind andere negative Beträge des Winkels 2100.

## Patentansprüche

1. Schneidelement (4a, 4b, 4c) für ein Reibwerkzeug (1), aufweisend eine linear verlaufend ausgeformte Hauptschneidkante (410), eine linear verlaufend ausgeformte erste Nebenschneidkante (510), eine Spanleitstruktur (8a, 8b, 450, 900, 910), eine an die erste Nebenschneidkante (510) und die Hauptschneidkante (410) angrenzend ausgeformte erste Fläche (900) der Spanleitstruktur (8a, 8b, 450, 900, 910) zu einer Kontaktierung mittels der Hauptschneidkante (410) erzeugter Späne, eine linear verlaufend ausgeformte zweite Nebenschneidkante (520) und eine an die zweite Nebenschneidkante (520) angrenzend ausgeformte zweite Fläche (8b) der Spanleitstruktur (8a, 8b, 450, 900, 910), **dadurch gekennzeichnet, dass** mindestens eine durch zwei oder mehr Mündungskanten (450c, 920) begrenzte erste Übergangsfläche (910) der Spanleitstruktur (8a, 8b, 450, 900, 910) in einen zwischen der ersten Nebenschneidkante (510) und der zweiten Nebenschneidkante (520) gebildeten Übergangsbereich (950) in Draufsicht auf das Schneidelement (4a, 4b, 4c) schmaler werdend mündend ausgeformt und ein Abstand (L950) zwischen der ersten Nebenschneidkante (510) und der zweiten Nebenschneidkante (520) kleiner als eine Länge (L510) der ersten Nebenschneidkante (510) sind.

2. Schneidelement (4a, 4b, 4c) nach Anspruch 1, **dadurch gekennzeichnet, dass** der Abstand (L950) größer oder gleich 0 µm und kleiner oder gleich 50 µm ist.

3. Schneidelement (4a, 4b, 4c) nach einem der vorhergehenden Ansprüche, **dadurch gekennzeichnet, dass** mindestens eine der Mündungskanten (450c) mit einer Ecke (950b) des Übergangsbereichs (950) verbunden sowie der zweiten Nebenschneidkante (520) benachbart ist, so dass ein in Richtung quer zu der zweiten Nebenschneidkante bemessener Abstand zwischen der mit der Ecke (950b) verbundenen mindestens einen Mündungskante (450c) sowie der zweiten Nebenschneidkante (520) eine nicht lineare Funktion einer Position entlang der zweiten Nebenschneidkante (520) ist.

4. Schneidelement (4a, 4b, 4c) nach einem der vorhergehenden Ansprüche, **dadurch gekennzeichnet, dass** eine an die erste Nebenschneidkante (510) und die zweite Nebenschneidkante (520) angrenzende Führungsfase (800) zu einer Führung des Schneidelementes (4a, 4b, 4c) in und/oder an einer Ausnehmung vorgesehen ist.

5. Schneidelement (4a, 4b, 4c) nach einem der vorhergehenden Ansprüche, **dadurch gekennzeichnet, dass** die Führungsfase (800) zumindest abschnittsweise konvex ist.

6. Schneidelement (4a, 4b, 4c) nach einem der vorhergehenden Ansprüche, **dadurch gekennzeichnet, dass** eine Breite (B810, B820) der Führungsfase (800) konstant oder in einem an die erste Nebenschneidkante (510) angrenzenden Bereich der Führungsfase (800) 50 µm oder weniger kleiner als in einem an die zweite Nebenschneidkante (520) angrenzenden Bereich der Führungsfase (800) ist.

7. Schneidelement (4a, 4b, 4c) nach einem der vorhergehenden Ansprüche, **dadurch gekennzeichnet, dass** die erste Nebenschneidkante (510) und die zweite Nebenschneidkante (520) fluchtend oder in Richtung senkrecht zu der ersten Nebenschneidkante (510) 50 µm oder weniger zueinander parallel verlaufend versetzt angeordnet sind.

8. Schneidelement (4a, 4b, 4c) nach einem der vorhergehenden Ansprüche, **dadurch gekennzeichnet, dass** eine an die zweite Fläche (8b) angrenzend ausgeformte Neigungsfläche (450) der Spanleitstruktur (8a, 8b, 450, 900, 910) und eine zwischen der Neigungsfläche (450) und der zweiten Fläche (8b) linear verlaufend ausgeformte Übergangskante (450a) vorgesehen sind, so dass in einer parallel zu der Hauptschneidkante (410) und der ersten Nebenschneidkante (510) aufgespannten Projektionsebene eine orthogonale Projektion der Übergangskante (450a) und eine orthogonale Projektion der Hauptschneidkante (410) in einem Kanteninnenwinkel (960) zueinander angeordnet sind, wobei der Kanteninnenwinkel (960) größer 20° und kleiner als 180° bemessen ist.

9. Schneidelement (4a, 4b, 4c) nach einem der vorhergehenden Ansprüche, **dadurch gekennzeichnet, dass** eine zwischen der ersten Übergangsfläche (910) und der zweiten Fläche (8b) angeordnete dritte Fläche (450) der Spanleitstruktur (8a, 8b, 450, 900, 910) vorgesehen ist, wobei in einer senkrecht zu der Hauptschneidkante (410) orientierten Schnittebene die erste Fläche (900) und die dritte Fläche (450) in einem größer 90° und kleiner 180° bemessenen Außenflächenwinkel (1000) zueinander angeordnet sind.

10. Schneidelement (4a, 4b, 4c) nach einem der vorhergehenden Ansprüche, **dadurch gekennzeichnet, dass** der Außenflächenwinkel (1000) größer oder gleich 120° und kleiner 180° ist.

11. Schneidelement (4a, 4b, 4c) nach einem der vorhergehenden Ansprüche, **dadurch gekennzeichnet, dass** ein Schneidkantenradius der ersten Nebenschneidkante (510) größer oder gleich 0 µm und kleiner oder gleich 30 µm ist.

12. Schneidelement (4a, 4b, 4c) nach einem der vorhergehenden Ansprüche, **dadurch gekennzeichnet, dass** eine Nebenschneidkantenbezugslinie (2100) von einem mit der zweiten Nebenschneidkante (520) gebildeten Schnittpunkt ausgehend nach einem davon beabstandeten Punkt der Nebenschneidkantenbezugslinie (2100) in Richtung auf das Schneidelement (4a, 4b, 4c) innerhalb eines an die zweite Fläche (8b) angrenzenden Innenbereichs des Schneidelements (4a, 4b, 4c) anordenbar ist, wobei die Nebenschneidkantenbezugslinie (2100) die zweite Nebenschneidkante (520) senkrecht kreuzend sowie parallel zu einer durch die erste Nebenschneidkante (510) und die Hauptschneidkante (410) aufgespannten Bezugsebene orientiert ist.

13. Schneidelement (4a, 4b, 4c) nach einem der vorhergehenden Ansprüche, **dadurch gekennzeichnet, dass** eine an die zweite Fläche (8b) und die erste Übergangsfläche (910) angrenzend ausgeformte zweite Übergangsfläche (450) der Spanleitstruktur vorgesehen ist und dass eine Bezugslinie von einem mit der zweiten Nebenschneidkante (520) gebildeten Schnittpunkt ausgehend nach einem davon beabstandeten Punkt der Bezugslinie in Richtung auf das Schneidelement (4a, 4b, 4c) außerhalb eines an die zweite Übergangsfläche angrenzenden Innenbereichs des Schneidelements (4a, 4b, 4c) abschnittsweise anordenbar ist, wobei die Bezugslinie die zweite Nebenschneidkante (520) senkrecht kreuzend sowie parallel zu einer durch die erste Nebenschneidkante (410) und die Hauptschneidkante (410) aufgespannten Bezugsebene orientiert ist.

14. Schneidelement (4a, 4b, 4c) nach einem der vorhergehenden Ansprüche, **dadurch gekennzeichnet, dass** die dritte Fläche (450) die zweite Übergangsfläche (450) und/oder die Neigungsfläche (450) ist.

15. Schneidelement (4a, 4b, 4c) nach einem der vorhergehenden Ansprüche, **dadurch gekennzeichnet, dass** die erste Übergangsfläche (910) kleiner als die dritte Fläche (450) ist.

16. Schneidelement (4a, 4b, 4c) nach einem der vorhergehenden Ansprüche, **dadurch gekennzeichnet, dass** die erste Übergangsfläche (910) konkav, die erste Fläche (900) eben und die dritte Fläche (450) eben ausgeformt sind.

17. Reibwerkzeug (1), aufweisend mindestens zwei umfänglich angeordnete sowie sich in axialer Richtung erstreckende Schneidelemente (4a, 4b, 4c), **dadurch gekennzeichnet, dass** mindestens eines der Schneidelemente (4a, 4b, 4c) nach einem der Ansprüche 1 bis 16 ausgestaltet ist.

18. Reibwerkzeug (1) nach Anspruch 17, **dadurch gekennzeichnet, dass** das Reibwerkzeug (1) monolithisch ausgeformt ist.
